# EUROPÄISCHE PATENTSCHRIFT

(11) **EP 3 180 791 B1**
(45) Veröffentlichungstag und Bekanntmachung des Hinweises auf die Patenterteilung: **09.01.2019**
(21) Anmeldenummer: 15756578.9
(22) Anmeldetag: 13.08.2015
(51) Int. Cl.: G21K 7/00, G21K 1/06, G01N 23/20016

(54) **VERFAHREN ZUM SCANNEN EINER PROBE MITTELS EINER RÖNTGENOPTIK UND EINE APPARATUR ZUM SCANNEN EINER PROBE**
METHOD FOR SCANNING A SAMPLE BY MEANS OF X-RAY OPTICS AND AN APPARATUS FOR SCANNING A SAMPLE
PROCÉDÉ DE BALAYAGE D'UN ÉCHANTILLON AU MOYEN D'UNE OPTIQUE À RAYONS X ET ÉQUIPEMENT DE BALAYAGE D'UN ÉCHANTILLON

(30) Priorität: 13.08.2014 DE 102014216081; 26.09.2014 DE 102014219601
(43) Veröffentlichungstag der Anmeldung: 21.06.2017
(73) Patentinhaber: Bruker Nano GmbH, 12489 Berlin (DE)
(72) Erfinder: WALDSCHLÄGER, Ulrich, 12685 Berlin (DE)
(74) Vertreter: Gulde & Partner
(86) Internationale Anmeldenummer: PCT/EP2015/068637
(87) Internationale Veröffentlichungsnummer: WO 2016/023975

(56) Entgegenhaltungen:
- WO-A1-97/22976
- JP-A- H0 280 944
- WIESEMANN U ET AL: "Construction of a scanning transmission X-ray microscope at the undulator U-41 at BESSY II", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, Bd. 467-468, 21. Juli 2001 (2001-07-21), Seiten 861-863, XP004298842, ISSN: 0168-9002, DOI: 10.1016/S0168-9002(01)00496-X

## Beschreibung

Die Erfindung betrifft ein Verfahren zum Scannen einer Probe mittels einer Röntgenoptik zum Bestrahlen einer Probe mit Röntgenstrahlen. Zudem betrifft die Erfindung eine Apparatur zum Scannen der Probe, wobei die Apparatur eine Röntgenoptik umfasst.

Röntgenoptiken werden gemäß dem Stand der Technik innerhalb einer Messapparatur auf einen Brennfleck einer Röntgenröhre justiert und in einer gewünschten Richtung ausgerichtet. Ein Beispiel für eine Röntgenoptik ist eine Polykapillar-Röntgenlinse. Polykapillar-Röntgenlinsen weisen einen Eingangsfokus und einen Ausgangsfokus auf.

Der Eingangsfokus wird im Rahmen einer Grundjustage der Messapparatur mit einem Brennfleck einer Röntgenröhre in Deckung gebracht. Der Brennfleck entsteht durch einen Beschuss einer Anode mit einem Elektrodenstrahl, wobei Röntgenstrahlung entsteht. Dadurch, dass der Eingangsfokus mit dem Brennfleck in Deckung gebracht wird, kann ein möglichst großer Anteil der emittierten Röntgenstrahlung zur Untersuchung einer Probe genutzt werden.

Zum Scannen der Probe wird zunächst der Ausgangsfokus der Röntgenoptik auf in der Probe positioniert. Beim eigentlichen Scanvorgang wird ein Probentisch, auf welcher die Probe angeordnet ist, in zwei verschiedene Richtungen (x- und y-Richtung) verschoben und somit die Probe entlang dieser Richtungen analysiert. Man spricht auch von einem "Abrastern".

Die Druckschriften Wiesemann et al, Construction of a scanning transmission X-ray microscope at the undulator U-41 at BESSY II, Nuclear Instruments & Methods in Physics Research, Section A, Volume 467-468, pages 861-863 (2001), doi:10.1016/S0168-9002(01)00496-X, WO 97/22976 A1 und JP H02 80944 A offenbaren Verfahren und Apparaturen zum Scannen.

Der Erfindung liegt nun die Aufgabe zugrunde, ein verbessertes Verfahren und eine verbesserte Apparatur zum Scannen einer Probe zu schaffen.

Diese Aufgabe wird durch ein Verfahren und eine Apparatur mit den Merkmalen der unabhängigen Ansprüche gelöst. Weitere bevorzugte Ausgestaltungen der Erfindung ergeben sich aus den übrigen, in den Unteransprüchen genannten Merkmalen.

Das erfindungsgemäße Verfahren zum Scannen einer Probe mittels einer Röntgenoptik zum Bestrahlen der Probe mit Röntgenstrahlen, umfasst folgende Schritte:
(a) Verschieben einer durch einen optischen Ausgangsfokus der Röntgenoptik definierten Messstelle in der Probe in einer ersten Scanrichtung mittels Schwenkens der Röntgenoptik um eine erste Schwenkachse;
(b) Erfassen einer von der Probe ausgehenden Strahlung an mindestens zwei Messstellen entlang der ersten Scanrichtung;
(c) Zusammenfügen von mit der erfassten Strahlung korrelierenden Messwerten zu einem Gesamtscan.

Erfindungsgemäß wird also ein Verschieben einer Messstelle der Probe mittels eines Schwenkens der Röntgenoptik durchgeführt, um die Probe zu scannen (abzurastern). Die Messstelle, insbesondere ihre Position, Größe und/oder Form, wird durch aus der Röntgenoptik austretende Röntgenstrahlen definiert, Unter dem Scannen wird eine messtechnische Erfassung von Eigenschaften, insbesondere Materialeigenschaften, in Abhängigkeit von der Messstelle innerhalb der Probe verstanden. Es handelt sich somit um eine ortsaufgelöste Datenerfassung. Zumindest in der ersten Scanrichtung (oft auch als schnelle Richtung/Achse bezeichnet) muss zur Erfassung von von der Probe ausgehender Strahlung ein Probentisch, auf welchem die Probe angeordnet ist, nicht mehr verschoben werden. Dadurch kann ein Geschwindigkeitszuwachs beim Scannen erreicht werden.

Röntgenoptiken sind allgemein Mittel zur Beeinflussung eines Strahlenganges von Röntgenstrahlung. Das Verschwenken kann ein wenigstens näherungsweises Verschwenken der Röntgenoptik um die Schwenkachse sein. Unter dem "wenigstens näherungsweisen Verschwenken um die Schwenkachse" kann vorliegend eine Rotationsbewegung oder eine Kombination aus einer Rotations- und einer Translationsbewegung verstanden werden. Die Goniometerkinematik ist jedoch derart ausgebildet, dass bei den typischerweise (sehr kleinen) durchgeführten Schwenkwinkeln der Röntgenoptik eine auftretende Translationsbewegung des optischen Ausgangspunkts, wobei erfindungsgemäß der Ausgangspunkt ein Ausgangsfokus ist, von oder zu der (während des Schwenkens ortsfesten) Schwenkachse bezogen auf eine Translationsbewegung entlang der Scanrichtung vernachlässigt werden kann.

Während des Schwenkens oder nach einzelnen (Teil-) Schwenkungen erfolgt das Erfassen der von der Probe ausgehenden Strahlung. Die von der Probe ausgehende Strahlung kann z. B. emittierte, reflektierte oder transmittierte Strahlung sein. Es kann sich dabei um elektromagnetische Strahlung, z. B. Röntgenstrahlung oder Korpuskularstrahlen (Elektronenstrahlen) handeln. Die ausgehende Strahlung resultiert aus der Bestrahlung der Messstelle mit den aus der Röntgenoptik austretenden Röntgenstrahlen.

Ferner werden Messwerte, welche mit der erfassten Strahlung korrelieren, also von der erfassten Strahlung abhängen, zu einem Gesamtscan zusammengefügt. Der Gesamtscan kann dabei ein (mehrdimensionaler) Datensatz sein, welcher z. B. optisch ausgegeben werden kann. Das Zusammenfügen der Messwerte zu dem Gesamtscan erfolgt entsprechend der Messstelle örtlich aufgelöst. Der Gesamtscan stellt dementsprechend ortsabhängige Probeninformationen dar. Dem geht ein örtlich aufgelöstes Erfassen der von der Probe ausgehenden Strahlung voraus. Mit anderen Worten werden die mit der erfassten Strahlung korrelierenden Messwerte zu einem Gesamtscan zusammengefügt, indem den Messwerten Ortsinformationen, an welchen die ausgehende Strahlung erfasst wurde (der Messstelle), (oder den Ortsinformationen Messwerten) zugeordnet werden. Die Ortsinformationen können wiederum in Abhängigkeit eines Schwenkwinkels des Schwenkens der Röntgenoptik bestimmt werden - beispielsweise durch die Anwendung von wenigstens einer Winkelfunktion. Unter "örtlich aufgelöst" wird eine Ortsauflösung innerhalb einer zu scannenden Probenebene der Probe, z. B. entlang einer Oberfläche der Probe, insbesondere in Form von x,y-Koordinaten, verstanden. Insgesamt wird somit ein Scannen (also Abrastern) der Probe mittels Verschwenkens der Röntgenoptik ermöglicht.

Bevorzugt ist vorgesehen, dass das Verfahren zudem folgende, auf Schritt (b) folgende Schritte umfasst:
- Verschieben der Messstelle in der Probe in einer zweiten Scanrichtung mittels Schwenkens der Röntgenoptik um eine zweite Schwenkachse; und
- Wiederholen der Schritte (a) und (b).

Somit erfolgt auch in der zweiten Scanrichtung ein Verschieben der Messstelle in der Probe mittels eines Schwenkens der Röntgenoptik. Die zweite Scanrichtung ist von der ersten Scanrichtung verschieden. Ferner ist auch die erste Schwenkachse von der zweiten Schwenkachse verschieden. Anschließend erfolgt wiederum das Verschieben der durch den optischen Ausgangsfokus der Röntgenoptik definierten Messstelle in der Probe in der ersten Scanrichtung mittels Schwenkens der Röntgenoptik um eine erste Schwenkachse. In diesem Fall kann die erste Scanrichtung ein negatives Vorzeichen aufweisen, sodass die Röntgenoptik entlang der ersten Scanrichtung zurückgeschwenkt wird. Ferner erfolgt wiederum das Erfassen einer von der Probe ausgehenden Strahlung an mindestens zwei Messstellen entlang der ersten Scanrichtung. Die in der ersten Scanrichtung erfasste Strahlung kann als eine erfasste "Zeile" bezeichnet werden. Die Zeilen werden somit abwechselnd in der positiven oder negativen ersten Scanrichtung erfasst, wodurch ein besonders schnelles Scannen erreicht wird.

Alternativ kann vor, nach oder während dem Verschieben in der zweiten Scanrichtung die Röntgenoptik zunächst in der negativen ersten Scanrichtung zurückgeschwenkt werden. Es wird also ein Zeilenrücklauf durchgeführt. Anschließend erfolgt wiederum das Verschieben der Messstelle in der positiven ersten Scanrichtung und das Erfassen der von der Probe ausgehenden Strahlung an mindestens zwei Messstellen entlang der positiven ersten Scanrichtung. Durch den Zeilenrücklauf nach jeder erfassten Zeile (entlang der ersten Scanrichtung) werden mechanische Fehler unterdrückt.

Das Verschieben der Messstelle und das Erfassen der ausgehenden Strahlung können kontinuierlich oder diskontinuierlich (schrittweise) erfolgen. Bei dem kontinuierlichen Verschieben und Erfassen wird während die Messstelle verschoben wird, die ausgehende Strahlung erfasst. Die Schritte (a) und (b) werden somit zeitgleich durchgeführt. Eine Definition von einzelnen Messpunkten des Gesamtscans kann hinterher durch eine Zuordnung von den mit der erfassten Strahlung korrelierenden Messwerten mit entsprechenden Positionsdaten erfolgen. Bei dem schrittweisen Verschieben und Erfassen wird hingegen zunächst die Messstelle verschoben und anschließend die ausgehende Strahlung erfasst. Schritt (a) wird also zeitlich vor Schritt (b) durchgeführt.

Im Rahmen der vorliegenden Erfindung wird auf ein raumfestes, dreidimensionales, kartesisches Koordinatensystems, umfassend einen Koordinatenursprung und davon ausgehend eine x-Achse, eine y-Achse und eine z-Achse Bezug genommen. Jede einzelne der Achsen ist zu den beiden anderen Achsen orthogonal angeordnet.

Unter dem Begriff "Richtung" wird in dieser Anmeldung, sofern nicht genauer ausgeführt, die raumfeste (ortsfeste) Richtung unabhängig vom Vorzeichen bezeichnet. Die erste Scanrichtung verläuft insbesondere in x-Richtung, während die zweite Scanrichtung insbesondere in y-Richtung verläuft. Beide Scanrichtungen sind somit insbesondere orthogonal (rechtwinkelig) zueinander ausgerichtet.

Die erste Scanrichtung (x-Richtung) bezeichnet somit eine Richtung, welche in Richtung der positiven oder negativen ersten Scanrichtung (x-Achse) zeigt.

Die zweite Scanrichtung (y-Richtung) bezeichnet eine Richtung, welche in Richtung der positiven oder negativen zweiten Scanrichtung (y-Achse) zeigt.

Eine z-Richtung bezeichnet eine Richtung, welche in Richtung der positiven oder negativen z-Achse zeigt.

Insbesondere bezeichnet die z-Richtung eine Richtung einer optischen Achse der Röntgenoptik in einer Ausgangsposition der Röntgenoptik, also in einer Mittenlage der Verschwenkung.

Die erste und die zweite Scanrichtung verlaufen insbesondere in der Probenebene, welche auch als xy-Ebene bezeichnet werden kann. Die Probenebene verläuft also insbesondere rechtwinklig zur z-Richtung. Die erste und die zweite Schwenkachse können somit insbesondere parallel zur Probenebene (und/oder einem Probentisch) verlaufen.

Die erste Schwenkachse verläuft insbesondere rechtwinkelig zur ersten Schwenkrichtung. Ferner verläuft die zweite Schwenkachse insbesondere rechtwinkelig zur zweiten Schwenkrichtung. Insbesondere sind die erste und die zweite Schwenkachse rechtwinkelig zueinander angeordnet. Insbesondere schneidet die zweite Schwenkachse die erste Schwenkachse.

Vorzugsweise ist vorgesehen, dass die erste Schwenkachse und/oder die zweite Schwenkachse durch einen optischen Eingangspunkt der Röntgenoptik verläuft. Somit verläuft die wenigstens eine Schwenkachse bei einer optimalen Einstellung des optischen Eingangspunktes auf einen Brennfleck einer Anode (Röntgenröhre) durch den Brennfleck. Dies bewirkt, dass auch beim Verschwenken der Röntgenoptik die Intensität der durch die Röntgenoptik geleiteten Strahlung erhalten bleibt. Es tritt beim Verschwenken der Röntgenoptik also im Wesentlichen kein Intensitätsverlust der zum Bestrahlen der Probe verwendeten Röntgenstrahlen auf.

Vorzugsweise ist vorgesehen, dass ein maximaler Schwenkwinkel beim Schwenken der Röntgenoptik höchstens +- 5 ° (also insgesamt 10 °), insbesondere höchstens +- 3 °(also insgesamt 6 °), bevorzugt höchstens +- 2 ° (also insgesamt 4 °) beträgt. Dadurch wird gewährleistet, dass der optische Ausgangsfokus der Röntgenoptik, welcher die Messstelle definiert, beim Schwenken der Röntgenoptik nur unwesentlich in der z-Richtung verschoben wird. Dadurch wird eine Verschiebung der Messstelle innerhalb der Probe in der z-Richtung, verringert oder ein Austreten des optischen Ausgangsfokus aus der Probe verhindert. Die Verschiebung des optischen Ausgangsfokus in z-Richtung beträgt insbesondere höchstens 0,4 mm, bevorzugt höchstens 0,2 mm, besonders bevorzugt höchstens 0,1 mm.

Ferner umfasst das Verfahren einen Schritt des Verschiebens der Probe in der ersten Scanrichtung und/oder der zweiten Scanrichtung. Beim Verschieben der Probe ohne gleichzeitigem Verschwenken der Röntgenoptik bleibt die Messstelle in einem ortsfesten Koordinatensystem zwar am gleichen Ort, jedoch wird die Probe relativ zur Messstelle verschoben. Somit kann einerseits z. B. nur in der ersten Scanrichtung das Verschieben der Messstelle mittels des Schwenkens der Röntgenoptik um die erste Schwenkachse erfolgen, während ein Verschieben der Messstelle in der zweiten Scanrichtung relativ zur Probe mittels des Verschiebens der Probe erfolgt. Ferner können relativ große Verschiebungen der Messstelle relativ zur Probe mittels des Verschiebens der Probe erfolgen, während dazu relativ kleine Verschiebungen der Messstelle mittels des Schwenkens der Röntgenoptik erfolgen können.

Die erfindungsgemäße Apparatur zum Scannen einer Probe umfasst:
- Eine Röntgenoptik zum Bestrahlen einer Probe mit Röntgenstrahlen, wobei die Röntgenoptik einen optischen Ausgangspunkt aufweist;
- einen, mit der Röntgenoptik verbundenen Goniometermechanismus, wobei der Goniometermechanismus eingerichtet ist, ein Verschwenken der Röntgenoptik um eine erste Schwenkachse auszuführen;
- wenigstens einen Aktor, welcher zur Betätigung des Goniometermechanismus ausgebildet ist; und
- eine Steuerungseinrichtung, welche zur Durchführung des Verfahrens nach einem der vorhergehenden Ansprüche ausgebildet ist.

Kennzeichnend ist vorgesehen, dass der optische Ausgangspunkt ein Ausgangsfokus ist. Die Röntgenoptik kann in einer Ausgangsposition in z-Richtung ausgerichtet sein, wobei sich die erste Schwenkachse in einer, von der z-Richtung verschiedenen Richtung erstreckt. Die Röntgenoptik kann z. B. form-, und/oder kraftschlüssig, insbesondere mittels einer Schraubverbindung mit dem Goniometermechanismus verbunden sein. Mittels des wenigstens einen Aktors ist die Röntgenoptik um die wenigstens eine Schwenkachse schwenkbar. Ein dazu besonders geeigneter Goniometermechanismus ist in der PCT/EP2014/052852 beschrieben. Ferner kann die Apparatur einen Detektor aufweisen, welcher zum Erfassen einer von der Probe ausgehenden Strahlung ausgebildet ist.

Die wenigstens eine Schwenkachse bezeichnet eine gedachte, nicht physische Schwenkachse, welche durch die konstruktiven Eigenschaften der Apparatur vorbestimmt ist, und um welche die Röntgenoptik wenigstens näherungsweise von dem Goniometermechanismus geschwenkt werden kann.

Vorzugsweise ist vorgesehen, dass die Apparatur zum Verschieben der Probe in der ersten Scanrichtung und/oder der zweiten Scanrichtung ausgebildet ist. Dazu kann die Apparatur insbesondere einen in der ersten und/oder zweiten Scanrichtung verschiebbaren Probentisch umfassen, welcher z. B. eine Aufnahme für eine Probenhalterung aufweist.

Besonders bevorzugt ist vorgesehen, dass der Goniometermechanismus eingerichtet ist, ein Schwenken der Röntgenoptik um eine zweite Schwenkachse auszuführen. Somit wird ein Verschieben der Messstelle in der Probe in einer zweiten Scanrichtung mittels Schwenkens der Röntgenoptik um die zweite Schwenkachse ermöglicht. Um Messungen in der ersten und zweiten Scanrichtung durchzuführen, kann ein verschiebbarer Probentisch entfallen.

Bevorzugt ist vorgesehen, dass die Röntgenoptik eine Röntgenlinse, insbesondere eine Kapillarlinse, bevorzugt eine Polykapillarlinse ist. Insbesondere Polykapillarlinsen eignen sich um Röntgenstrahlen in einem Brennfleck einer Röntgenröhre zu erfassen und in der Messstelle der Probe zu bündeln.

Röntgenoptiken können einen optischen Eingangspunkt und einen optischen Ausgangspunkt aufweisen. Der optische Eingangspunkt ist ein eingangsseitiger Punkt, welcher eine definierte, also vorbestimmte räumliche Position mit Bezug zur Röntgenoptik aufweist. Typischerweise ist der Eingangspunkt von der Röntgenoptik beabstandet, also der Röntgenoptik bezogen auf die Strahlenausbreitung vorgelagert. Analog dazu ist der optische Ausgangspunkt ein ausgangsseitiger Punkt, welcher eine definierte, also vorbestimmte räumliche Position mit Bezug zur Röntgenoptik aufweist. Typischerweise ist auch der Ausgangspunkt von der Röntgenoptik beabstandet, also der Röntgenoptik bezogen auf die Strahlenausbreitung nachgelagert.

Der Eingangs- und der Ausgangspunkt können durch röntgenoptische Eigenschaften der Röntgenoptik definiert sein. Bevorzugt ist der Eingangspunkt ein Eingangsfokus. Der Ausgangspunkt ist gemäß der Erfindung ein Ausgangsfokus. Ferner können der Eingangs- und der Ausgangspunkt auch Punkte sein, welche z. B. nur teilweise durch die Eigenschaften der Röntgenoptik festgelegt werden. Dies kann beispielsweise der Fall sein, wenn der Eingangs- und Ausgangspunkt auf einer Linsenachse, z. B. einer Symmetrieachse (also einer Mittenachse) der Röntgenoptik angeordnet sind, aber ihre Abstände von der Röntgenoptik nicht durch die Röntgenoptik selbst bestimmt werden. Die Abstände von der Röntgenoptik können aufgrund weiterer (z. B. von Umgebungsparametern beeinflussten) Überlegungen, oder auch beliebig (im Falle des Ausgangspunkts nicht Teil der Erfindung) festgelegt werden. Prinzipiell können als Eingangs- und der Ausgangspunkt (im Falle des Ausgangspunkts nicht Teil der Erfindung) je nach Anwendung auch beliebige, eingangs- und ausgangsseitige Punkte (mit vor der Justage festgelegten Positionen in Bezug zur Röntgenoptik) gewählt werden.

Röntgenlinsen weisen als optischen Eingangspunkt einen Eingangsfokus und als optischen Ausgangspunkt einen Ausgangsfokus auf. Kapillar-Linsen weisen in ihrem Inneren wenigstens eine Kapillare, insbesondere eine Vielzahl an Kapillaren auf. Die Kapillaren der Kapillar-Linse sind typischerweise derart angeordnet und geformt, dass durch sie, mittels Totalreflexion hindurchtretende Röntgenstrahlen in dem Eingangsfokus aufgenommen und auf den Ausgangsfokus gelenkt werden.

Bevorzugt ist die Röntgenoptik eine HOPG-Optik (Highly Oriented Pyrolytic Graphite) oder eine HAPG-Optik (Highly Annealed Pyrolytic Graphite). Auch in diesem Fall ist der optische Eingangspunkt ein Eingangsfokus und der optische Ausgangspunkt ein Ausgangsfokus. Vorzugsweise ist die Röntgenoptik eine elliptische Monokapillare. Die elliptische Monokapillare weist als optischen Eingangspunkt einen Quellen-Brennpunkt und als optischen Ausgangspunkt einen Ausgangs-Brennpunkt auf.

Ferner bevorzugt ist die Röntgenoptik eine zylindrische Monokapillare. Der optische Eingangs- und Ausgangspunkt der zylindrischen Monokapillare sind (wie bereits weiter oben allgemein bezüglich der Röntgenoptik definiert) eingangs- und ausgangsseitige Punkte mit einer definierten räumlichen Position mit Bezug zur Röntgenoptik. Vorzugsweise liegt zumindest der optische Eingangspunkt auf einer Symmetrieachse der Monokapillaren.

Bevorzugt umfasst der Aktor einen Elektromotor, insbesondere einen Linearmotor, oder ein Piezoelement. Elektromotoren sind in verschiedensten Ausführungen kostengünstig verfügbar. Piezoelemente zeichnen sich insbesondere durch eine erhöhte Genauigkeit bei relativ kleinen Verstellwegen aus.

Vorzugsweise umfasst der Goniometermechanismus wenigstens eine trapezförmige Führung.

Die trapezförmige Führung ist insbesondere eine gleichschenklige, symmetrische, trapezförmige Führung. "Gleichschenkelig und symmetrisch" beziehen sich wie auch der Begriff "trapezförmig" analog zu einer Parallelogrammführung auf die funktionale Geometrie der Führung und nicht zwingend auf die optische Erscheinung der Führung. Weist der Goniometermechanismus zwei trapezförmige Führungen auf, so können diese als eine erste trapezförmige Führung und als eine zweite trapezförmige Führung bezeichnet werden.

Mittels trapezförmigen Führungen kann mit relativ geringen Kosten und Platzbedarf wenigstens näherungsweise eine Schwenkbewegung der Röntgenoptik realisiert werden. Durch die Kinematik der trapezförmigen Führung beschreibt die Röntgenoptik bei der Schwenkbewegung auch stets eine relativ geringe translatorische Bewegung. Um die translatorische Bewegung in beide Schwenkrichtungen möglichst gleich und klein zu halten, wird die Ausgangsposition so gewählt, dass die Führung eine gleichschenklige, symmetrische, trapezförmige Form beschreibt. Bei einem Verschwenken der Röntgenoptik werden die beiden, in der Ausgangsposition noch parallelen Seiten der trapezförmigen Führung zueinander leicht verschwenkt. Die trapezförmige Führung kann also allgemein auch als eine Viereckführung mit einem Paar gleich langer gegenüberliegender Seiten bezeichnet werden.

In der Praxis kann beim Schwenken der Röntgenoptik die aus der Kinematik der trapezförmigen Führung entstehende translatorische Bewegung der Röntgenoptik vernachlässigt werden. Der Schwenkwinkel beträgt dazu vorzugsweise höchstens +- 5 °, insbesondere höchstens +- 3 °, bevorzugt höchstens +- 2 °. Die Translation des optischen Eingangspunkts bezogen auf die Schwenkachse beträgt vorzugsweise höchstens +- 0,2 mm / °, insbesondere höchstens +- 0,1 mm / °. Vorzugsweise beträgt eine Verdrehung der Verbindungselemente bezogen auf ein stillstehendes Gegenelement (und ausgehend von der Ausgangslage) während der Goniometerbewegung höchstens +- 5 °, ferner bevorzugt höchstens +- 3 °, insbesondere höchstens +- 2 °. Je kleiner die Verschwenkung ist, desto geringer ist ein Betrag der translatorische Bewegung zwischen dem optischen Eingangspunkt und dem Brennfleck, auf welchen der Eingangspunkt vorab justiert wurde.

Insbesondere ist vorgesehen, dass die wenigstens eine trapezförmige Führung ein erstes Gegenelement und ein zweites Gegenelement umfasst, welche mittels eines Verbindungselementenpaares (insbesondere gelenkig) miteinander verbunden sind. Die gelenkigen Verbindungen sind insbesondere mittels Festkörpergelenken realisiert. Für eine ideale Funktionsweise weisen die beiden Verbindungselemente zwischen ihren jeweiligen beiden Verbindungen mit den Gegenelementen die gleiche Länge auf. Der Abstand auf Seiten des Gegenelements, welches der Drehachse zugewandt ist, ist zwischen den Verbindungen mit den Verbindungselementen jedoch geringer als der entsprechende Abstand auf Seiten des anderen Gegenelements.

Entsprechend einer trapezförmigen Führung kann folgende Geometrie gegeben sein: Eine erste Verbindungsebene verläuft parallel zu der Schwenkachse der Führung und durch die gelenkigen Verbindungen auf Seiten des ersten Gegenelementes. Ebenso verläuft eine zweite Verbindungsebene parallel zu der Schwenkachse der Führung und durch die gelenkigen Verbindungen auf Seiten des zweiten Gegenelementes. Die erste Verbindungsebene ist zwischen der Schwenkachse und der zweiten Verbindungsebene angeordnet. Zudem verläuft eine weitere Ebene durch die, mit den Gegenelementen verbundenen Enden eines ersten Verbindungselements, deren beide Schnittgeraden mit den Verbindungsebenen in Richtung der Schwenkachse ausgerichtet sind. Eine weitere Ebene verläuft durch die, mit den Gegenelementen verbundenen Enden des zweiten Verbindungselements, deren beide Schnittgeraden mit den Verbindungsebenen in Richtung der Schwenkachse ausgerichtet sind. Entlang der ersten Verbindungsebene ist ein erster Abstand der beiden Ebenen durch die Verbindungselemente kleiner als ein zweiter Abstand der beiden Ebenen entlang der zweiten Verbindungsebene. Zudem ist ein Abstand zwischen den gelenkigen Verbindungen des ersten Verbindungselementes mit dem ersten Gegenelement und mit dem zweiten Gegenelement entlang der Ebene des Verbindungselements gleich dem entsprechenden Abstand des zweiten Verbindungselements. Die Verbindungsebenen verlaufen bei, "klassischen" Gelenken durch Drehachsen oder Drehpunkte der gelenkigen Verbindungen, wobei die Drehachsen in Richtung der Schwenkachsen verlaufen. Die gelenkigen Verbindungen sind insbesondere mittels Festkörpergelenken realisiert. Bei Festkörpergelenken verlaufen die Verbindungsebenen durch die Festkörpergelenke, insbesondere durch jene Enden der Festkörpergelenke, welche von den Verbindungselementen weg weisen.

In der Ausgangsposition sind die beiden Verbindungsebenen typischerweise parallel zueinander angeordnet. Betrachtet die insgesamt vier Ebenen seitlich, also derart, dass diese als Geraden erscheinen, so bilden die vier Ebenen ein gleichschenkliges, symmetrisches Trapez.

Bei einer Goniometerbewegung ändern sich die Winkel zwischen den beiden Verbindungselementen und den beiden Gegenelementen. Dadurch führt ein Gegenelement in Relation zum anderen Gegenelement die Goniometerbewegung aus.

Gemäß einer bevorzugten Ausgestaltung der Erfindung ist vorgesehen, dass die erste trapezförmige Führung zur wenigstens näherungsweisen Verschwenkung der Röntgenoptik um die erste Schwenkachse
- ein erstes Gegenelement,
- ein zweites Gegenelement und
- ein, die beiden Gegenelemente verbindendes Verbindungselementenpaar umfasst, wobei
- die Verbindungselemente des Verbindungselementenpaars in einer ersten Verbindungsebene, welche in Richtung der Erstreckung der ersten Schwenkachse verläuft, jeweils über wenigstens ein erstes Ende mit dem ersten Gegenelement verbunden sind und
- die Verbindungselemente des Verbindungselementenpaars in einer zweiten Verbindungsebene, welche in Richtung der Erstreckung der ersten Schwenkachse verläuft und (im Bereich der ersten trapezförmigen Führung) auf der, der ersten Schwenkachse abgewandten Seite der ersten Verbindungsebene angeordnet und zur ersten Verbindungsebene beabstandet ist, jeweils über wenigstens ein zweites Ende mit dem zweiten Gegenelement verbunden sind und
- in einer Richtung verlaufend entlang der ersten Verbindungsebene und rechtwinklig zu der ersten Schwenkachse das wenigstens eine erste Ende eines der Verbindungselemente zu dem wenigstens einen ersten Ende des anderen Verbindungselements einen ersten Abstand aufweist und in einer Richtung verlaufend entlang der zweiten Verbindungsebene und rechtwinklig zu der ersten Schwenkachse das wenigstens eine zweite Ende eines der Verbindungselemente zu dem wenigstens einen zweiten Ende des anderen Verbindungselements einen zweiten Abstand aufweist, wobei der erste Abstand kleiner als der zweite Abstand ist, und
- in Richtungen entlang des Verlaufs einer Ebene, welche rechtwinklig zu der ersten Schwenkachse verläuft, die jeweiligen Abstände des jeweiligen, wenigstens einen ersten Endes zu dem jeweiligen, wenigstens einen zweiten Ende der Verbindungselemente gleich sind, und
- die erste trapezförmige Führung über eines ihrer Gegenelemente mit dem Aufnahmeelement mechanisch verbunden ist und somit die näherungsweise Verschwenkung der Röntgenoptik um die erste Schwenkachse durch eine Verschwenkung des mit dem Aufnahmeelement mechanisch verbundenen Gegenelements zum anderen Gegenelement realisierbar ist.

Gemäß einer weiteren bevorzugten Ausgestaltung der Erfindung ist vorgesehen, dass die zweite trapezförmige Führung zur wenigstens näherungsweisen Verschwenkung der Röntgenoptik um die zweite Schwenkachse
- ein erstes Gegenelement,
- ein zweites Gegenelement und
- ein, die beiden Gegenelemente verbindendes Verbindungselementenpaar umfasst, wobei
- die Verbindungselemente des Verbindungselementenpaars in einer ersten Verbindungsebene, welche in Richtung der Erstreckung der zweiten Schwenkachse verläuft jeweils über wenigstens ein erstes Ende mit dem ersten Gegenelement verbunden sind und
- die Verbindungselemente des Verbindungselementenpaars in einer zweiten Verbindungsebene, welche in Richtung der Erstreckung der zweiten Schwenkachse verläuft und (im Bereich der zweiten trapezförmigen Führung) auf der, der zweiten Schwenkachse abgewandten Seite der ersten Verbindungsebene angeordnet und zur ersten Verbindungsebene beabstandet ist, jeweils über wenigstens ein zweites Ende mit dem zweiten Gegenelement verbunden sind und
- in einer Richtung verlaufend entlang der ersten Verbindungsebene und rechtwinklig zu der zweiten Schwenkachse das wenigstens eine erste Ende eines der Verbindungselemente zu dem wenigstens einen ersten Ende des anderen Verbindungselements einen ersten Abstand aufweist und in einer Richtung verlaufend entlang der zweiten Verbindungsebene und rechtwinklig zu der zweiten Schwenkachse das wenigstens eine zweite Ende eines der Verbindungselemente zu dem wenigstens einen zweiten Ende des anderen Verbindungselements einen zweiten Abstand aufweist, wobei der erste Abstand kleiner als der zweite Abstand ist, und
- in Richtungen entlang des Verlaufs einer Ebene, welche rechtwinklig zu der zweiten Schwenkachse verläuft, die jeweiligen Abstände des jeweiligen, wenigstens einen ersten Endes zu dem jeweiligen, wenigstens einen zweiten Ende der Verbindungselemente gleich sind, und
- die zweite trapezförmige Führung über eines ihrer Gegenelemente mit dem Aufnahmeelement mechanisch verbunden ist und somit die näherungsweise Verschwenkung der Röntgenoptik um die erste Schwenkachse durch eine Verschwenkung des mit dem Aufnahmeelement mechanisch verbundenen Gegenelements zum anderen Gegenelement realisierbar ist.

Die ersten Verbindungsebenen verlaufen beabstandet zu der jeweiligen Schwenkachse. Die Bezeichnung einer Richtung, welche "entlang" einer Ebene verläuft, kann auch als eine Richtung, welche parallel zu dieser Ebene verläuft gelesen werden.

Eines der Gegenelemente ist somit jener Teil der trapezförmigen Führung, welches zum anderen Gegenelement die Schwenkbewegung um die jeweilige Schwenkachse ausführen kann. Das Aufnahmeelement ist mit den parallel verschiebbaren Gegenelementen mechanisch verbunden, insbesondere integral verbunden. Die Verbindungselemente des Verbindungselementenpaares sind Schenkel, welche die beiden Gegenelemente miteinander verbinden.

An den Enden der Verbindungselemente sind die Verbindungselemente mit den Gegenelementen verbunden. Diese Verbindung ist derart ausgeführt, dass wenigstens näherungsweise eine Verdrehung der Verbindungselemente relativ zu den Gegenelementen ermöglicht wird. Die näherungsweise Verdrehung kann dabei einen rotatorischen und einen translatorischen Anteil aufweisen. Der rotatorische Anteil weist dabei einen Vektor auf, welcher in Richtung parallel zu der Schwenkachse zeigt. Der Vektor steht dabei rechtwinklig auf eine Ebene, in welcher die Rotation erfolgt.

Ein Verbindungselement weist wenigstens ein erstes Ende und wenigstens ein zweites Ende auf. Bei mehreren ersten und/oder zweiten Enden pro Verbindungselement sind jeweils die ersten Enden und/oder die zweiten Enden in Richtung der jeweiligen Schwenkachse der Führung versetzt angeordnet. Somit liegen auch die ersten und zweiten Enden des jeweiligen Verbindungselements in einer Ebene. Diese Ebene erstreckt sich somit ebenfalls in Richtung der jeweiligen Schwenkachse.

In der Ausgangsposition sind die erste und die zweite Verbindungsebene der jeweiligen trapezförmigen Führung typischerweise parallel zueinander angeordnet. Somit erscheint das Trapez als symmetrisches, gleichschenkliges Trapez.

Vorzugsweise umfasst die Apparatur zwei trapezförmige Führungen, wobei die ersten Gegenelemente zwischen dem zweiten Gegenelement der jeweiligen Führung und der ersten Schwenkachse angeordnet sind und zwei der ersten Gegenelemente oder zwei der zweiten Gegenelemente der wenigstens zwei Führungen unbeweglich miteinander verbunden oder einstückig ausgeführt sind. Es sind also die ersten Gegenelemente auf einer der ersten Schwenkachse zugewandten Seite und die zweiten Gegenelemente auf einer von der ersten Schwenkachse abgewandten Seite angeordnet. Somit sind die beiden trapezförmigen Führungen über deren jeweiliges erstes oder zweites Gegenelement miteinander verbunden, oder die beiden trapezförmigen Führungen teilen sich ein erstes oder zweites Gegenelement. Dies resultiert in einem platzsparend kompakten, ineinander verschachtelten Aufbau der beiden Führungen. Die beiden Gegenelemente der trapezförmigen Führungen, welche nicht unbeweglich miteinander verbunden oder einstückig ausgeführt sind, sind typischerweise in einer Richtung rechtwinklig zu einer der Verbindungsebenen der nicht verbundenen Gegenelemente zueinander beabstandet, sodass eine Relativbewegung zwischen ihnen ermöglicht ist.

Bevorzugt ist vorgesehen, dass
- das erste Gegenelement der ersten trapezförmigen Führung mit der Röntgenoptik unbeweglich verbunden ist,
- das zweite Gegenelement der ersten trapezförmigen Führung mit dem zweiten Gegenelement der zweiten trapezförmigen Führung unbeweglich verbunden oder einstückig ausgeführt ist, und
- das erste Gegenelement der zweiten trapezförmigen Führung zur Fixierung der Apparatur vorgesehen ist.

Durch diese Ausgestaltung ergibt sich ein besonders kompakter Aufbau des Goniometermechanismus. Die unbewegliche Verbindung mit der Röntgenoptik ist typischerweise lösbar ausgeführt.

Vorzugsweise sind die trapezförmigen Führungen derart zueinander angeordnet, dass die Röntgenoptik im Wesentlichen zentral, zwischen den jeweiligen beiden Verbindungselementen der Verbindungselementenpaare aufnehmbar ist. Durch die zentrale Anordnung der Röntgenoptik zwischen den Verbindungselementen der Verbindungselementenpaare wird eine kompakte Anordnung erzielt. Zu diesem Zweck kann der Goniometermechanismus (insbesondere die wenigstens eine trapezförmige Führung) eine sie durchdringende Öffnung aufweisen, innerhalb welcher die Röntgenoptik angeordnet ist.

Vorzugsweise ist vorgesehen, dass der Goniometermechanismus, insbesondere die wenigstens eine trapezförmige Führung, Festkörpergelenke aufweist. Festkörpergelenke zeichnen sich durch den Wegfall von Losbrechmomenten aus. Somit kann eine schwingungsarme und exakte Verschwenkung vorgenommen werden, wodurch das erfindungsgemäße Verfahren insbesondere in Kombination mit der trapezförmigen Führung entschieden verbessert wird. Insbesondere durch die Festkörpergelenke wird zudem eine Reduzierung der Teilezahl gegenüber "klassischen" Kinematiken ermöglicht.

Die Festkörpergelenke sind insbesondere Flachkörper, deren Hauptflächen (die Flächen mit dem größten Flächeninhalt) bei einer trapezförmigen Führung im Wesentlichen in eine Richtung weisen, welche sich entlang der jeweiligen Verbindungsebene und rechtwinklig zu der Schwenkachse erstreckt. Mit anderen Worten erstrecken sich die Festkörpergelenke mit deren Hauptausdehnungen entlang Ebenen, welche rechtwinkelig auf die jeweilige Verbindungsebene und in Richtung der jeweiligen Schwenkachse verlaufen. Somit ist eine Nachgiebigkeit der Festkörpergelenke in Richtung rechtwinklig zu der Schwenkachse entlang der jeweiligen Verbindungsebene geringer als in anderen Richtungen. Dadurch wird eine gezielte Verbiegung in der gewünschten Richtung bei relativ geringem Kraftaufwand ermöglicht. Die Verbindungselemente sind vorzugsweise in Relation zu den Festkörpergelenken im Wesentlichen starr.

Vorzugsweise ist vorgesehen, dass die trapezförmigen Führungen ineinander angeordnet sind. Insbesondere sind die trapezförmigen Führungen koaxial ineinander angeordnet. Die Führungen können insbesondere im Wesentlichen hohlzylinderförmig ausgebildet sein. Ferner kann wenigstens eine der Führungen eine Öffnung aufweisen, in welcher wenigstens eine der anderen Führungen angeordnet ist,

Gemäß einer bevorzugten Ausgestaltung der Erfindung ist vorgesehen, dass die beiden trapezförmigen Führungen verdreht ineinander angeordnet sind. Die Führungen können um eine (optische) Achse der Röntgenoptik, insbesondere um eine Linsenachse (z. B. eine Verbindungslinie, welche den Eingangspunkt mit dem Ausgangspunkt verbindet) einer Röntgenlinse verdreht zueinander angeordnet sein. Insbesondere sind die Führungen derart ineinander angeordnet, dass die innere Führung zwischen den Verbindungselementen der äußeren Führung angeordnet ist. Dadurch ergibt sich ein besonders kompakter Aufbau der Apparatur.

Bevorzugt ist vorgesehen, dass der Goniometermechanismus einstückig ausgebildet ist. Die einstückigen Ausführungen können z. B. durch Drehen, Fräsen, Bohren und/oder Drahterodieren hergestellt werden. Dies erlaubt eine kostengünstige Fertigung, wodurch ein Kostenvorteil der Apparatur gegenüber herkömmlichen Verstelleinrichtungen erzielt werden kann.

Vorzugsweise ist vorgesehen, dass die Aktoren ausgebildet sind,
- eine erste Schwenkkraft in das erste Gegenelement der ersten trapezförmigen Führung einzuleiten, wobei die erste Schwenkkraft eine Komponente in der ersten Scanrichtung aufweist (wodurch das näherungsweise Verschwenken der Röntgenoptik um die erste Schwenkachse durchführbar ist),
   und insbesondere
- eine zweite Schwenkkraft in das erste Gegenelement der ersten trapezförmigen Führung einzuleiten, wobei die zweite Schwenkkraft eine Komponente in der zweiten Scanrichtung aufweist, welche über die Verbindungselemente der ersten trapezförmigen Führung an das zweite Gegenelement der ersten und der zweiten trapezförmigen Führung leitbar ist (wodurch das näherungsweise Verschwenken der Röntgenoptik um die zweite Schwenkachse durchführbar ist).

Somit ist eine platzsparende des Goniometermechanismus an lediglich einer Seite des Goniometermechanismus sichergestellt. Vorzugsweise entsprechen die Beträge der Komponenten im Wesentlichen den jeweiligen Beträgen der Einstellkräfte.

Die Einstellkräfte bewirken das Schwenken des ersten Gegenelementes. Der jeweilige Aktor bringt zum Verschwenken des Goniometermechanismus in eine Scanrichtung mit einem positivem Vorzeichen z. B. eine Druckkraft auf das erste Gegenelement auf, und zum Verschwenkung des Goniometermechanismus in eine Scanrichtung mit einem negativen Vorzeichen eine Zugkraft auf das Gegenelement auf, wobei sich die Kräfte der Aktoren und jene aus einer elastischen Rückstellung der Festkörpergelenke zumindest teilweise kompensieren oder auch überkompensieren können.

Die Apparatur weist bevorzugt eine Höhe von vorzugsweise 30 mm bis 150 mm, insbesondere 40 mm bis 70 mm in der z-Richtung und/oder einen Durchmesser von vorzugsweise 20 mm bis 100, insbesondere 30 mm bis 50 mm im Wesentlichen rechtwinkelig zu der z-Richtung auf.

Die Erfindung wird nachfolgend in Ausführungsbeispielen anhand der zugehörigen Zeichnungen erläutert. Es zeigen:
- Figur 1: eine Schnittdarstellung einer Apparatur,
- Figur 2: eine Detailansicht der Schnittdarstellung der Apparatur,
- Figur 3: eine Vorderansicht eines Parallelverschiebemechanismus,
- Figur 4: eine Seitenansicht des Parallelverschiebemechanismus,
- Figur 5: eine erste isometrische Ansicht des Parallelverschiebemechanismus,
- Figur 6: eine zweite isometrische Ansicht des Parallelverschiebemechanismus,
- Figur 7: eine Vorderansicht eines Goniometermechanismus,
- Figur 8: eine Seitenansicht des Goniometermechanismus,
- Figur 9: eine erste isometrische Ansicht des Goniometermechanismus,
- Figur 10: eine zweite isometrische Ansicht des Goniometermechanismus,
- Figur 11: ein Verfahrensablauf gemäß einer bevorzugten Ausgestaltung,
- Figur 12: eine schematische Darstellung des Verfahrensablaufs,
- Figur 13: eine Darstellung der Messstellen in einer Probe, und
- Figur 14: ein Messraster.

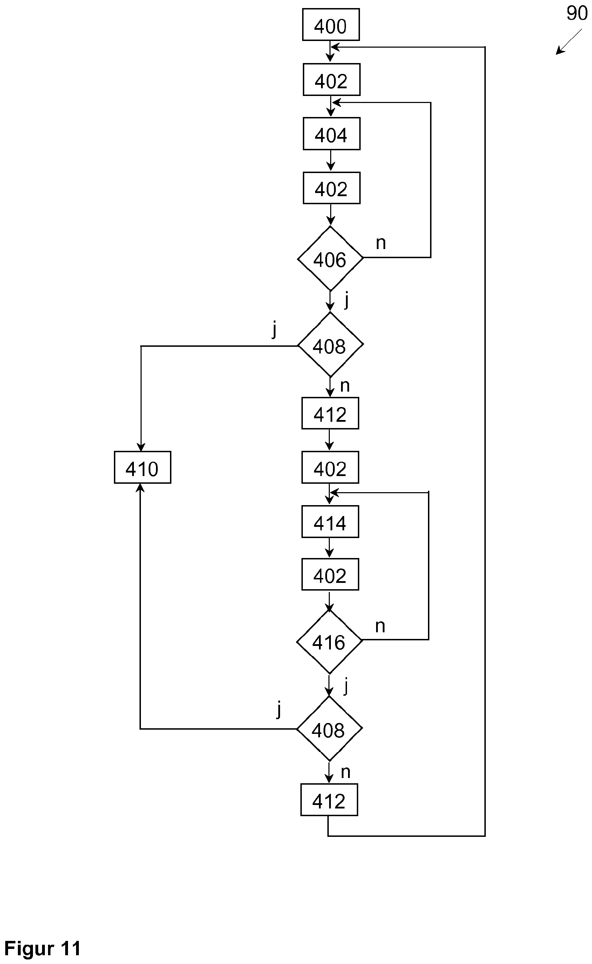

Das erfindungsgemäße Verfahren zum Scannen einer Probe 99 mittels einer Röntgenoptik 100 wird mittels den Figuren 11 bis 14 und in der dazugehörigen Figurenbeschreibung beschrieben.

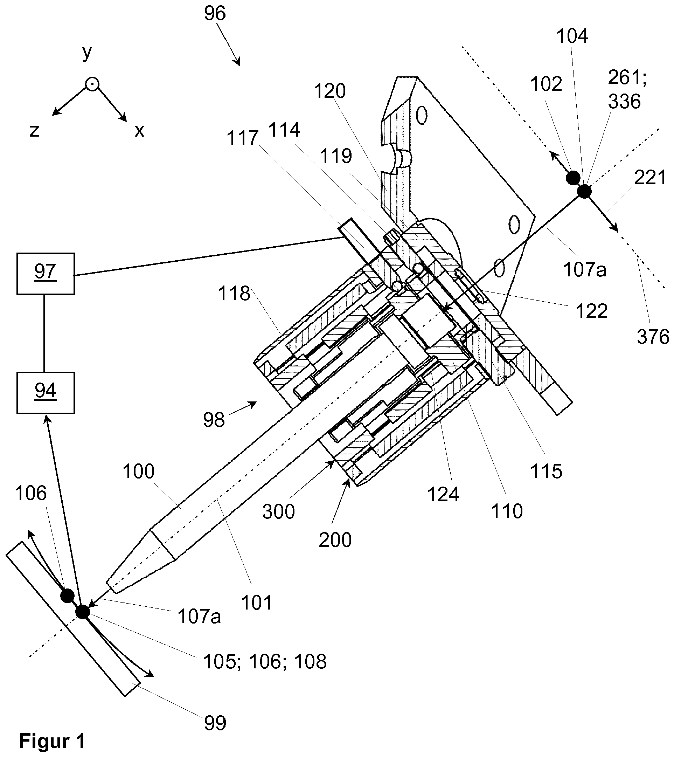

Figur 1 zeigt eine Schnittdarstellung einer Apparatur 96 gemäß einer bevorzugten Ausgestaltung der Erfindung mit Blickrichtung entgegen einer y-Achse in eine negative y-Richtung. Ein Kreis mit einem mittigen Kreuz symbolisiert einen Pfeil mit Blick in Pfeilrichtung, wohingegen ein Kreis mit einem mittigen Punkt einen Blick entgegen der Pfeilrichtung symbolisiert.

Die Apparatur 96 umfasst eine Röntgenoptik 100 z. B. eine Kapillar-Linse 100 (eine Polykapillar-Linse) zum Bestrahlen einer Probe 99 mit Röntgenstrahlen. Ferner umfasst die Apparatur 96 einen mit der Röntgenoptik 100 verbundenen Goniometermechanismus 300, wobei der Goniometermechanismus 300 eingerichtet ist, ein Verschwenken der Röntgenoptik 100 um eine erste Schwenkachse 336 auszuführen. Ferner umfasst die Apparatur 96 wenigstens einen Aktor 117, z. B. einen Elektromotor, welcher zur Betätigung des Goniometermechanismus 300 ausgebildet ist, und eine Steuerungseinrichtung 97 zur Ansteuerung des wenigstens einen Aktors 117.

Der Goniometermechanismus 300 kann dazu eingerichtet sein, ein Verschwenken der Röntgenoptik 100 um eine zweite Schwenkachse 376 auszuführen.

Der Goniometermechanismus 300 kann Teil einer besonders vorteilhaft ausgestalteten Vorrichtung 98 zur räumlichen Ausrichtung der Röntgenoptik 100 sein, welche wie folgt beschrieben wird:
Die Vorrichtung 98 kann in einem Gehäuse mit einem ersten Gehäuseteil 118, einem zweiten Gehäuseteil 119 und einer Halterung 120 (zur Fixierung der Apparatur 96) angeordnet sein. Ferner umfasst die Apparatur 96 eine Kapillar-Linse 100, welche in einem Linsengehäuse und nicht geschnitten dargestellt ist.

Die Vorrichtung 98 und die Linse 100 werden typischerweise in einem Raum mit reduziertem Druck (teilweises Vakuum) betrieben. Eine Abdichtung des Vakuums erfolgt typischerweise entlang einer äußeren Mantelfläche des ersten Gehäuseteils 118. Die Halterung 120 ist dabei außerhalb des Vakuums angeordnet. Die der Vorrichtung zugewandte Seite des zweiten Gehäuseteils 119 ist auf Seiten des Vakuums, die andere Seite außerhalb des Vakuums. Dadurch ist der wenigstens eine Aktor 117 außerhalb des Vakuums angeordnet. Ferner sind auch Einstellelemente 114 (z. B. ein Feingewindetrieb) zur Betätigung eines Parallelverschiebemachanismuses 200 von außerhalb des Vakuums betätigbar. Eine Gegenkraft zu einer Einstellkraft der Einstellelemente 114 und des wenigstens einen Aktors 117 kann mittels Federelementen 115 aufgebracht werden. Die Einstellelemente 114 und Federelemente 115 können mittels Fett in das zweite Gehäuseteil 119 eingedichtet werden.

Mittels des ersichtlichen Einstellelements 114 kann die Vorrichtung 98 derart betätigt werden, dass eine Parallelverschiebung in einer ersten Parallelverschieberichtung 221 durchgeführt wird. Ferner kann mittels des Aktors 117 ein wenigstens näherungsweises Verschwenken der Linse 100 um eine erste Schwenkachse 336 (projiziert als Punkt dargestellt) durchgeführt werden. Durch die Verschwenkung der Linse 100 bedingte Verschiebungen der Linse 100 in z-Richtung können für gewöhnlich vernachlässigt werden. Mittels eines weiteren, nicht ersichtlichen Einstellelements kann die Vorrichtung 98 derart betätigt werden, dass eine Parallelverschiebung in einer zweiten Parallelverschieberichtung 261 (projiziert als Punkt dargestellt) durchgeführt werden kann. Ferner kann mittels eines weiteren, nicht ersichtlichen Aktors ein wenigstens näherungsweises Verschwenken der Linse 100 um eine zweite Schwenkachse 376 durchgeführt werden.

Im gezeigten Beispiel verlaufen sowohl die beiden Parallelverschieberichtung 221, 261, als auch die beiden Schwenkachsen 336, 376 in xy-Richtungen, also innerhalb einer xy-Ebene.

Im Speziellen können sich, wie gezeigt, die erste Parallelverschieberichtung 221 sowie die zweite Schwenkachse 376 in x-Richtung und die zweite Parallelverschieberichtung 261 sowie die erste Schwenkachse 336 in y-Richtung erstrecken. Die beiden Parallelverschieberichtungen 221, 261, wie auch die beiden Schwenkachsen 336, 376 können somit einen rechten Winkel zueinander bilden.

Die Linse 100 ist in der gezeigten Ausgangsposition mittels eines Aufnahmeelements 110 in z-Richtung ausgerichtet und weist einen optischen Eingangspunkt 104 und einen optischen Ausgangspunkt 108 auf, welche in z-Richtung voneinander beabstandet sind. Da es sich bei der dargestellten Röntgenoptik 100 um eine Kapillar-Linse 100 handelt, ist der optische Eingangspunkt 104 ein Eingangsfokus 104 und der optische Ausgangspunkt 108 ein Ausgangsfokus 108. Somit ist eine Achse 101 der Röntgenoptik 100, im gezeigten Fall eine Linsenachse 101 der Linse in z-Richtung ausgerichtet und die Linse 100 in z-Richtung für Röntgenstrahlen durchlässig. Zudem ist der Eingangsfokus 104 der Linse 100 mittels des Aufnahmeelements 110 in dem Schnittpunkt der beiden Schwenkachsen 336, 376 positioniert. Ein Fenster 122 im zweiten Gehäuseteil 119 gewährleistet eine möglichst unbeeinflusste Transmission der Röntgenstrahlen und eine Abdichtung des Vakuums.

Vor der Justage des Eingangsfokus 104 auf einen ersten vorbestimmten Punkt 102 (z. B. einen Brennfleck einer Anode) wird zunächst überprüft, ob eine Abweichungen vom Eingangsfokus 104 zum ersten vorbestimmten Punkt 102 in z-Richtung vorliegt. Geringe Abweichungen können gegebenenfalls vor der restlichen Justage mittels unterschiedlich dicker Distanzscheiben (nicht dargestellt) an der Position 124 zwischen dem Aufnahmeelement 110 und der Linse 100 ausgeglichen werden.

Zur Justage wird zunächst der Eingangsfokus 104 in den Parallelverschiebungen 221, 261 auf den vorbestimmten Punkt 102 justiert, also mit dem vorbestimmten Punkt 102 in Deckung gebracht. Dabei werden die Schwenkachsen 336, 376 mit dem Eingangsfokus 104 mitverschoben, sodass auch der Schnittpunkt der Schwenkachsen 336, 376 mit dem vorbestimmten Punkt übereinstimmt. Somit ist gewährleistet, dass bei einer folgenden Verschwenkung der Linse 100 um die Schwenkachsen 336, 376 der Eingangsfokus 104 auf den vorbestimmten Punkt 102 justiert bleibt.

Zur Justage des Ausgangsfokus 108 auf eine Messstelle in der Probe wird ein Abstand zwischen dem Ausgangsfokus 108 und der gewünschten Messstelle in der Probe solange verringert, bis dieser im Wesentlichen null beträgt. Dies kann beispielsweise durch eine Verstellung des Probentisches in z-Richtung erfolgen.
Als Ergebnis der Justage ist der Eingangsfokus auf den vorbestimmten Punkt 104 und der Ausgangsfokus 108 auf die zentrale Messstelle 105 justiert.

Die gezeigten Abstände zwischen der Apparatur 96 und den Schwenkachsen 336, 376, den beiden Fokussen 104, 108, sowie dem vorbestimmten Punkt 102 und der zentralen Messstelle 105 sind in den Figuren nicht maßstabsgetreu dargestellt.

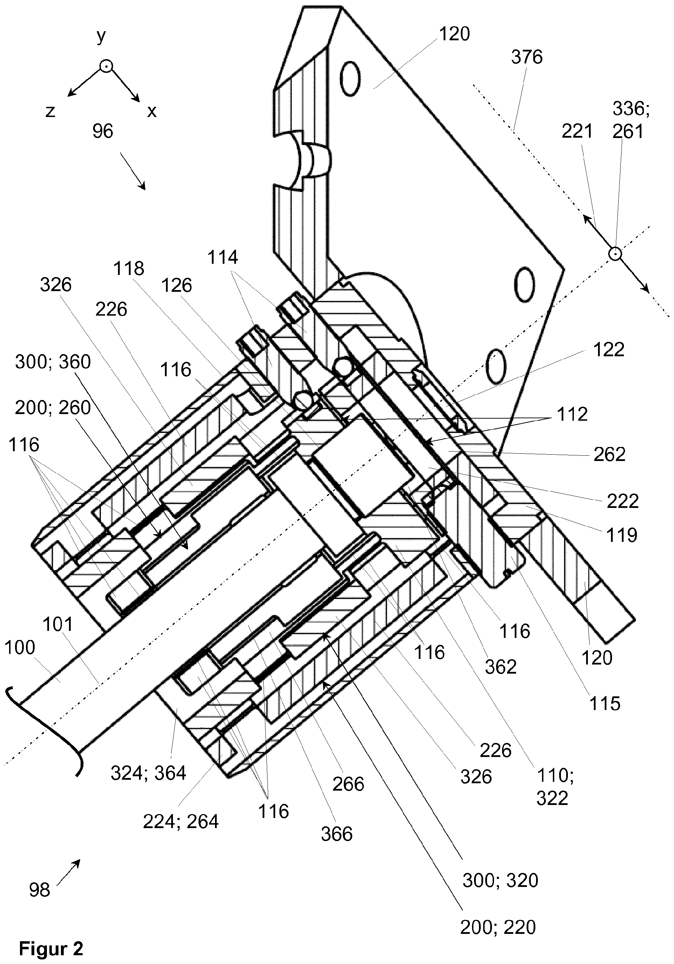

Figur 2 zeigt eine Detailansicht der aus Figur 1 bekannten Schnittdarstellung der Apparatur 96. Die Vorrichtung 98 zur räumlichen Ausrichtung einer Röntgenoptik 100 umfasst wie bereits beschrieben im Wesentlichen einen Parallelverschiebemechanismus 200 und einen Goniometermechanismus 300.

Der Parallelverschiebemechanismus 200 umfasst eine erste Parallelkinematik 220 zur Parallelverschiebung der Linse 100 in der ersten Parallelverschieberichtung 221 und eine zweite Parallelkinematik 260 zur Parallelverschiebung der Linse 100 in der zweiten Parallelverschieberichtung 261. Die beiden Kinematiken können wie dargestellt als eine erste Parallelogrammführung 220 und als eine zweite Parallelogrammführung 260 ausgeführt sein.

Der Goniometermechanismus 300 umfasst eine erste Goniometerkinematik 320 zur wenigstens näherungsweisen Verschwenkung der Linse 100 um die erste Schwenkachse 336 und eine zweite Goniometerkinematik 360 zur wenigstens näherungsweisen Verschwenkung der Linse um die zweite Schwenkachse 376. Diese beiden Kinematiken 320, 360 können wie dargestellt als eine erste symmetrische, trapezförmige Führung 320 und als eine zweite symmetrische, trapezförmige Führung 360 ausgeführt sein. Die Bezeichnung "symmetrische, trapezförmige Führung" bezeichnet analog zu einer Parallelogrammführung die funktionale Geometrie der Führung (in der dargestellten Ausgangsposition) und nicht zwingend die optische Erscheinung der Führung.

Der Goniometermechanismus 300 kann wie in Figur 2 ersichtlich ist, insbesondere in der Ausgangsposition koaxial zwischen dem Parallelverschiebemechanismus 200 und der Linsenachse 101 angeordnet sein.

Die Kinematiken 220, 260, 320, 360 umfassen jeweils ein erstes Gegenelement 222, 262, 322, 362, welches zwischen den Schwenkachsen 336, 376 und einem zweiten Gegenelement 224, 264, 324, 364 angeordnet ist.

Im Speziellen umfasst die erste Parallelogrammführung 220 ein erstes Gegenelement 222 und ein zweites Gegenelement 224, welche mittels zweier Verbindungselemente 226 miteinander verbunden sind. Die zweite Parallelogrammführung 260 umfasst ein erstes Gegenelement 262 und ein zweites Gegenelement 264, welche mittels zweier Verbindungselemente 266 miteinander verbunden sind. Von den zwei Verbindungselementen 266 ist nur eines ersichtlich, welches sich in Figur 2 hinter der Linse 100 erstreckt. Wie gezeigt, können die beiden zweiten Gegenelemente 224, 264 integral miteinander verbunden, also als ein gemeinsames Gegenelement ausgeführt sein. Das erste Gegenelement 262 dient zudem zur Fixierung der Vorrichtung im zweiten Gehäuseteil 119. Dies kann beispielsweise mittels Schraubverbindungen (nicht dargestellt) erfolgen. Zwischen den beiden ersten Gegenelementen 222, 262 befindet sich ein Spalt 112, damit eine Relativbewegung der ersten Gegenelemente 222, 262 zueinander möglich ist.

Die erste trapezförmige Führung 320 umfasst ein erstes Gegenelement 322 und ein zweites Gegenelement 324, welche mittels zweier Verbindungselemente 326 miteinander verbunden sind. Die zweite trapezförmige Führung 360 umfasst ein erstes Gegenelement 362 und ein zweites Gegenelement 364, welche mittels zweier Verbindungselemente 366 miteinander verbunden sind. Von den zwei Verbindungselementen 366 ist nur eines ersichtlich, welches sich in Figur 2 hinter der Linse 100 und vor dem Verbindungselement 266 erstreckt. Wie gezeigt, können die beiden zweiten Gegenelemente 324, 364 integral miteinander verbunden, also als ein gemeinsames Gegenelement ausgeführt sein. Das erste Gegenelement 322 ist mit dem Aufnahmeelement 110 einstückig ausgeführt und dient somit zur Aufnahme und Fixierung der Linse 100. Die Linse 100 ist im Beispiel mittels einer Schraubverbindung 126 in das Aufnahmeelement 110 eingeschraubt. Zwischen den beiden ersten Gegenelementen 322, 362 befindet sich ein Spalt 112, damit eine Relativbewegung der ersten Gegenelemente 322, 362 zueinander möglich ist.

Die Parallelverschiebemechanik 200 ist mit der Goniometermechanik 300 über das erste Gegenelement 222 und das erste Gegenelement 362 verbunden, sodass keine Relativbewegungen zueinander möglich sind. Im Beispiel sind diese miteinander verschraubt.

Entsprechend der vorliegenden Nomenklatur ist das jeweilige erste Gegenelement 222, 262, 322, 362 somit zwischen den Schwenkachsen 336, 376 und dem jeweiligen zweiten Gegenelement 224, 264, 324, 364 angeordnet. Mit anderen Worten ist das jeweilige zweite Gegenelement 224, 264, 324, 364 zum jeweiligen ersten Gegenelement 222, 262, 322, 362 in positiver z-Richtung beabstandet.

Die Verbindungen von den Verbindungselementen 226, 266, 326, 366 zu den Gegenelementen 222, 262, 322, 362, 224, 264, 324, 364 erfolgen besonders vorteilhaft mittels Festkörpergelenken 116. Auf diese Verbindungen wird in den Beschreibungen der folgenden Figuren näher eingegangen.

Durch die Verwendung von Festkörpergelenken 116 kann sowohl der Parallelverschiebemechanismus 200 als auch der Goniometermechanismus 300 einstückig ausgeführt werden.

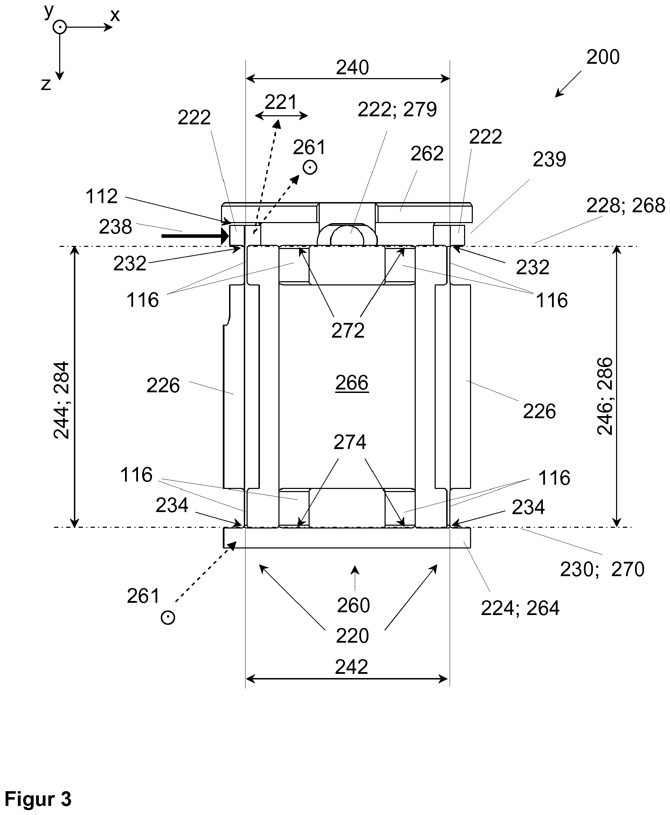

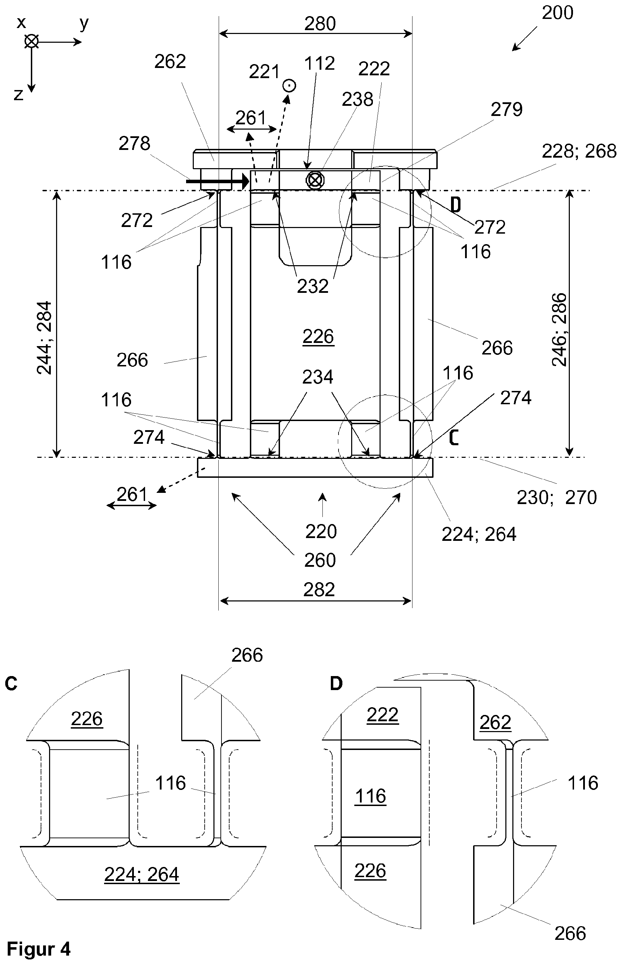

Figur 3 zeigt eine Vorderansicht des Parallelverschiebemechanismus 200, wiederum mit Blickrichtung entgegen der y-Achse in die negative y-Richtung. In dieser Ansicht wird das erste Gegenelement 222 der ersten Parallelogrammführung 220 teilweise durch das erste Gegenelement 262 der zweiten Parallelogrammführung 260 verdeckt, sodass der Spalt 112 (siehe insbesondere Figur 4) zwischen den ersten Gegenelementen 222, 262 nur teilweise ersichtlich ist. Figur 4 zeigt eine Seitenansicht des Parallelverschiebemechanismus 200 mit Blickrichtung in Richtung der x-Achse, also in die positive x-Richtung.

Die Festkörpergelenke 116 verbinden die Verbindungselemente 226, 266 mit den Gegenelementen 222, 262, 224, 264, wobei die Verbindung über wenigstens ein erstes Ende 232, 272 (im gezeigten Beispiel über jeweils zwei Enden 232, 272) und wenigstens ein zweites Ende 234, 274 (im gezeigten Beispiel über jeweils zwei Enden 234, 274) der Verbindungselemente 226, 266 erfolgt. Die Festkörpergelenke 116 sind bezüglich ihrer Biegesteifigkeiten bzw. Nachgiebigkeiten derart dimensioniert, dass ein Kraftaufwand zur Verbiegung in der jeweiligen Parallelverschieberichtung 221, 261 verglichen mit anderen Raumrichtungen wesentlich geringer ist.

In der ersten Parallelogrammführung 220 sind die Verbindungselemente 226 in einer ersten Verbindungsebene 228, welche entlang der ersten Parallelverschieberichtung 221 verläuft, jeweils über zwei erste Enden 232 mit dem ersten Gegenelement 222 verbunden. Im gezeigten Beispiel ist die erste Verbindungsebene 228 eine xy-Ebene. In einer, zur ersten Verbindungsebene 228 parallel beabstandeten, zweiten Verbindungsebene 230 sind die Verbindungselemente 226 über jeweils zwei zweite Enden 234 mit dem zweiten Gegenelement 224 verbunden. Das zweite Gegenelement 224 und die zweite Verbindungsebene 230 sind zum ersten Gegenelement 222 und zur ersten Verbindungsebene 228 in positiver z-Richtung versetzt.

In der ersten Parallelverschieberichtung 221 weisen die zwei ersten Enden 232 eines der Verbindungselemente 226 zu den zwei ersten Enden 232 des anderen Verbindungselements 226 einen ersten Abstand 240 auf. In dieser Richtung weisen auch die zwei zweiten Enden 234 eines der Verbindungselemente 226 zu den zwei zweiten Enden 234 des anderen Verbindungselements 226 einen zweiten Abstand 242 auf. Der erste Abstand 240 ist gleich dem zweiten Abstand 242, um eine Parallelogrammführung zu erzielen.

Daraus resultiert auch, dass in einer Ebene, welche in Richtung der ersten Parallelverschieberichtung 221 und rechtwinklig zu den beiden Verbindungsebenen 229, 230 verläuft, die jeweiligen Abstände 244, 246 zwischen den jeweiligen ersten Enden 232 und den jeweiligen zweiten Enden 234 der Verbindungselemente 226 gleich sind. Die zwei ersten Enden 232 und die zwei zweiten Enden 234 des jeweiligen Verbindungselements 226 sind in einer Richtung parallel zu den Verbindungsebenen 228, 230 und rechtwinklig zu der ersten Parallelverschieberichtung 221, im Beispiel also in y-Richtung zueinander versetzt.

Um eine Parallelverschiebung der Linse 100 in der ersten Parallelverschieberichtung 221 durchzuführen, wird mittels eines Einstellelements 114 eine erste Einstellkraft 238 in das erste Gegenelement 222 eingeleitet, wobei die erste Einstellkraft 238 eine Komponente in der ersten Parallelverschieberichtung 221 aufweist. Die dargestellte, erste Einstellkraft 238 weist im Ausführungsbeispiel eine (alleinige) Komponente in die positive x-Richtung auf. Durch die erste Einstellkraft 238 wird somit eine Biegung der Festkörpergelenke 116 und damit einhergehend eine Parallelverschiebung des ersten Gegenelements 222 relativ zum zweiten Gegenelement 224 erzielt.

Die Parallelverschiebung findet ein Ende, wenn ein Kräftegleichgewicht eingetreten ist. Dies ergibt sich auf der einen Seite aus der ersten Einstellkraft 238, welche in die positive x-Richtung wirkt und auf der anderen Seite aus Kräften resultierend aus der Biegung der Festkörpergelenke 116, sowie eine Federkraft (nicht dargestellt), welche von einem Federelement 115 aufgebracht wird und an einem ersten Gegenlager 239 in die negative x-Richtung wirkt. Durch eine Vorspannung des Federelements 115 kann auch eine Parallelverschiebung in die negative x-Richtung durchgeführt werden.

In der zweiten Parallelogrammführung 260 sind die Verbindungselemente 266 in einer ersten Verbindungsebene 268, welche entlang der zweiten Parallelverschieberichtung 261 verläuft, jeweils über zwei erste Enden 272 mit dem ersten Gegenelement 262 verbunden. Im gezeigten Beispiel ist die erste Verbindungsebene 268 eine xy-Ebene. In einer, zur ersten Verbindungsebene 268 parallel beabstandeten, zweiten Verbindungsebene 270 sind die Verbindungselemente 266 über zwei zweite Enden 274 mit dem zweiten Gegenelement 264 verbunden. Das zweite Gegenelement 264 und die zweite Verbindungsebene 270 sind zum ersten Gegenelement 262 und zur ersten Verbindungsebene 268 in positiver z-Richtung versetzt. In der zweiten Parallelverschieberichtung 261 weisen die zwei ersten Enden 272 eines der Verbindungselemente 266 zu den zwei ersten Enden 272 des anderen Verbindungselements 266 einen ersten Abstand 280 auf. In dieser Richtung weisen auch die zwei zweiten Enden 274 eines der Verbindungselemente 266 zu den zwei zweiten Enden 274 des anderen Verbindungselements 266 einen zweiten Abstand 282 auf. Der erste Abstand 280 ist gleich dem zweiten Abstand 282, um eine Parallelogrammführung zu erzielen. Daraus resultiert auch, dass in einer Ebene in Richtung der zweiten Parallelverschieberichtung 261 und rechtwinklig zu den beiden Verbindungsebenen 269, 270 die jeweiligen Abstände 284, 286 zwischen den jeweiligen ersten Enden 272 und den jeweiligen zweiten Enden 274 der Verbindungselemente 266 gleich sind. Die zwei ersten Enden 272 und die zwei zweiten Enden 274 des jeweiligen Verbindungselements 266 sind in einer Richtung parallel zu den Verbindungsebenen 268, 270 und rechtwinklig zu der zweiten Parallelverschieberichtung 261, im Beispiel also in x-Richtung zueinander versetzt.

Im Ausführungsbeispiel sind die ersten Verbindungsebenen 228 und 268, sowie die zweiten Verbindungsebenen 230, 270 der Parallelogrammführungen 220, 260 identisch.

Um eine Parallelverschiebung der Linse 100 in der zweiten Parallelverschieberichtung 261 durchzuführen, wird mittels eines Einstellelements 114 eine zweite Einstellkraft 278 in das erste Gegenelement 222 der ersten Parallelogrammführung 220 eingeleitet, wobei die zweite Einstellkraft 278 eine Komponente in der zweiten Parallelverschieberichtung 261 aufweist. Die dargestellte, zweite Einstellkraft 278 weist im Ausführungsbeispiel eine (alleinige) Komponente in die positive y-Richtung auf. Die zweite Einstellkraft 278 wird über die, in der zweiten Parallelverschieberichtung 261 biegesteifen Festkörpergelenke 116 der ersten Parallelogrammführung 220 an das gemeinsame zweite Gegenelement 224, 264 der ersten und der zweiten Parallelogrammführung 220, 260 geleitet. Durch die zweite Einstellkraft 278 wird somit eine Biegung der Festkörpergelenke 116 der zweiten Parallelogrammführung 260 und damit einhergehend eine Parallelverschiebung des zweiten Gegenelements 264 relativ zum zweiten Gegenelement 264 in der zweiten Parallelverschieberichtung 261 erzielt.

Die Parallelverschiebung findet ein Ende, wenn ein Kräftegleichgewicht in der zweiten Parallelverschieberichtung 261 eingetreten ist. Dies ergibt sich auf der einen Seite aus der zweiten Einstellkraft 278, welche in die positive y-Richtung wirkt und auf der anderen Seite aus Kräften resultierend aus der Biegung der Festkörpergelenke 116, sowie einer Federkraft (nicht dargestellt), welche von einem Federelement 115 aufgebracht wird und an einem ersten Gegenlager 279 in die negative y-Richtung wirkt. Durch eine Vorspannung des Federelements 115 kann auch eine Parallelverschiebung in die negative y-Richtung durchgeführt werden.

In den Details C und D sind die Festkörpergelenke 116 im Detail dargestellt. Diese weisen gegebenenfalls abgerundete Übergänge zu den Gegenelementen 222, 224, 262, 264 und den Verbindungselementen 226, 266 auf - symbolisch als gestrichelte Linien angedeutet.

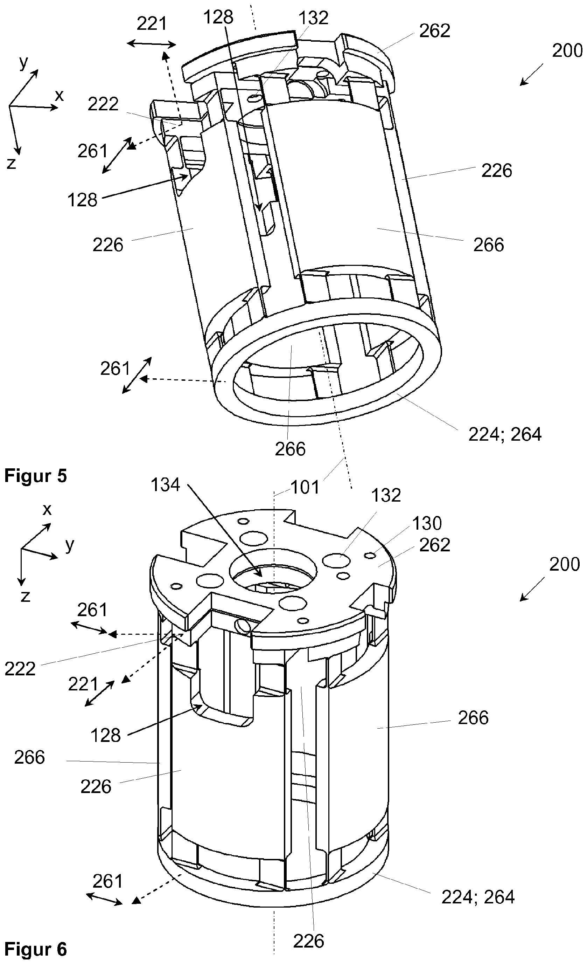

Figuren 5 und 6 zeigen isometrische Ansichten des Parallelverschiebemechanismus 200. Gut ersichtlich ist der koaxiale Aufbau des Parallelverschiebemechanismus 200 um die Linsenachse 101. Zudem ist eine Öffnung 134 ersichtlich, welche den Parallelverschiebemechanismus 200 und die gesamte Vorrichtung 98 durchdringt. Die Öffnung 134 dient zur Aufnahme des Goniometermechanismus 300. Zudem sind Gewindelöcher 130 in dem ersten Gegenelement 262 (Figur 6) ersichtlich, welche zur Fixierung des Parallelverschiebemechanismus 200 und somit der Vorrichtung 98 in dem zweiten Gehäuseteil 119 dienen. Die Durchgangslöcher 132 in dem ersten Gegenelement 222 (Figur 5) dienen zur Verbindung des Parallelverschiebemechanismus 200 mit dem Goniometermechanismus 300. Mittels der Durchgangslöcher 132 in dem ersten Gegenelement 262 (Figur 6) sind Schrauben durch das erste Gegenelement 262 durchführbar und deren Schraubenköpfe in das erste Gegenelement 222 einsetzbar. Der Parallelverschiebemechanismus 200 ist, wie auch der folgend erörterte Goniometermechanismus 300 einstückig ausgeführt.

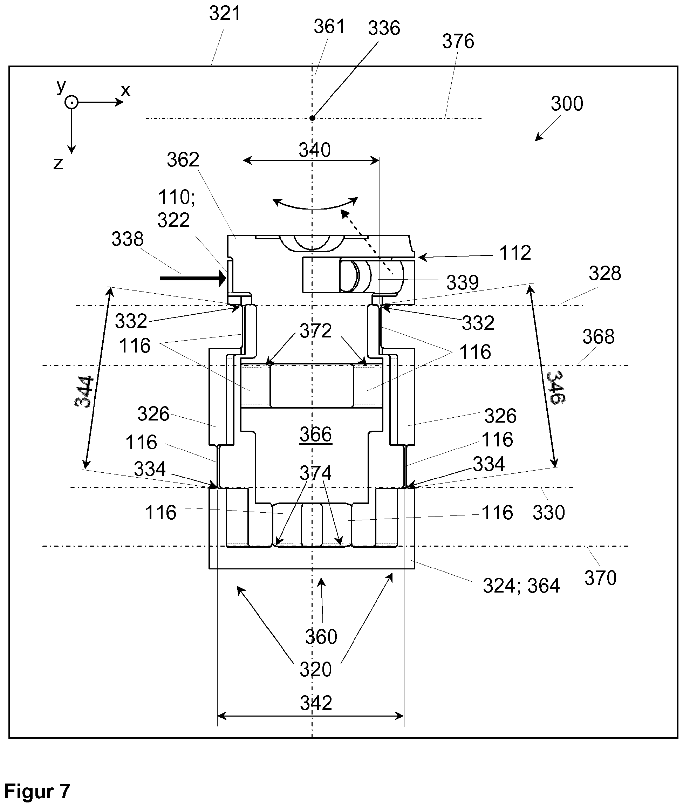

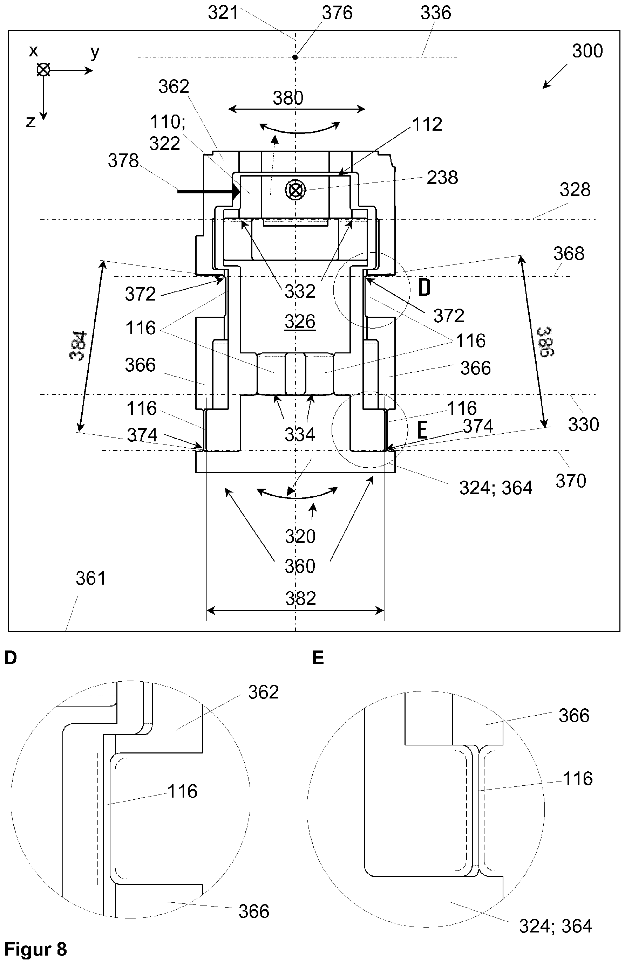

Figur 7 zeigt eine Vorderansicht des Goniometermechanismus 300, mit Blickrichtung entgegen der y-Achse in die negative y-Richtung. In dieser Ansicht wird das erste Gegenelement 322 der ersten symmetrischen, trapezförmigen Führung 320 teilweise durch das erste Gegenelement 362 der zweiten symmetrischen, trapezförmigen Führung 360 verdeckt, so dass der Spalt 112 (siehe insbesondere Figur 8) zwischen den ersten Gegenelementen 322, 362 nur teilweise ersichtlich ist. Figur 8 zeigt eine Seitenansicht des Goniometermechanismus 300 mit Blickrichtung in Richtung der x-Achse, also in die positive x-Richtung.

Die Festkörpergelenke 116 verbinden die Verbindungselemente 326, 366 mit den Gegenelementen 322, 362, 324, 364, wobei die Verbindung über wenigstens ein erstes Ende 332, 372 (im gezeigten Beispiel über jeweils zwei Enden 332, 372) und wenigstens ein zweites Ende 334, 374 (im gezeigten Beispiel über jeweils zwei Enden 334, 374) der Verbindungselemente 326, 366 erfolgt. Die Festkörpergelenke 116 sind bezüglich ihrer Biegesteifigkeiten bzw. Nachgiebigkeiten derart dimensioniert, dass ein Kraftaufwand zur Verbiegung um die erste Schwenkachse 336 (also eine Verbiegung in x-Richtung) oder um die zweite Schenkachse 376 (also eine Verbiegung in y-Richtung) verglichen mit anderen Raumrichtungen wesentlich geringer ist.

In der ersten trapezförmigen Führung 320 sind die Verbindungselemente 326 in einer ersten Verbindungsebene 328, welche parallel zu der ersten Schwenkachse 336 verläuft, jeweils über zwei erste Enden 332 mit dem ersten Gegenelement 322 verbunden. In einer, ebenfalls zur ersten Schwenkachse 336 parallel verlaufenden und zur ersten Verbindungsebene 328 beabstandeten, zweiten Verbindungsebene 330 sind die Verbindungselemente 326 über jeweils zwei zweite Enden 334 mit dem zweiten Gegenelement 324 verbunden. Im gezeigten Beispiel ist die zweite Verbindungsebene 330 eine xy-Ebene. Zudem ist in der gezeigten Ausgangsposition die erste Verbindungsebene 328 zur zweiten Verbindungsebene 330 parallel. Das zweite Gegenelement 324 und die zweite Verbindungsebene 330 sind zum ersten Gegenelement 322 und zur ersten Verbindungsebene 328 in positiver z-Richtung versetzt.

In einer Richtung verlaufend entlang der ersten Verbindungsebene 328 und rechtwinklig zu der ersten Schwenkachse 336 (im Beispiel in x-Richtung) weisen die zwei ersten Enden 332 eines der Verbindungselemente 326 zu den zwei ersten Enden 332 des anderen Verbindungselements 326 einen ersten Abstand 340 auf. In einer Richtung verlaufend entlang der zweiten Verbindungsebene 330 und rechtwinklig zu der ersten Schwenkachse 336 (im Beispiel in x-Richtung) weisen auch die zwei zweiten Enden 334 eines der Verbindungselemente 326 zu den zwei zweiten Enden 334 des anderen Verbindungselements 326 einen zweiten Abstand 342 auf. Der erste Abstand 340 ist kleiner als der zweite Abstand 342.

In Richtungen entlang des Verlaufs einer Ebene 321, welche rechtwinklig zu der ersten Schwenkachse 336 verläuft, sind die jeweiligen Abstände 344, 346 zwischen den jeweiligen ersten Enden 332 und den jeweiligen zweiten Enden 334 der Verbindungselemente 326 gleich. Die zwei ersten Enden 332 und die zwei zweiten Enden 334 des jeweiligen Verbindungselements 326 sind in Richtung der ersten Schwenkachse 336, im Beispiel also in y-Richtung zueinander versetzt.

Um eine Goniometerbewegung der Linse 100 um die erste Schwenkachse 336 durchzuführen, wird mittels eines Aktors 117 eine erste Schwenkkraft 338 in das erste Gegenelement 322 eingeleitet, wobei die erste Schwenkkraft 338 eine Komponente rechtwinklig zu der ersten Schwenkachse 336 und parallel zu der der ersten Verbindungsebene 328 aufweist. Die dargestellte, erste Schwenkkraft 338 weist im Ausführungsbeispiel eine (alleinige) Komponente in die positive x-Richtung auf. Durch die erste Schwenkkraft 338 wird somit eine Biegung der Festkörpergelenke 116 und damit einhergehend eine Goniometerbewegung des ersten Gegenelements 322 erzielt, indem das erste Gegenelement 322 wenigstens näherungsweise um die erste Schwenkachse 336 schwenkt. Solange die zweite trapezförmige Führung 360 nicht betätigt wird, wird die Linse 100 also in der Ebene 321 wenigstens näherungsweise verschwenkt.

Die Goniometerbewegung findet ein Ende, wenn ein Kräftegleichgewicht eingetreten ist. Dies ergibt sich auf der einen Seite aus der erste Schwenkkraft 338, welche in die positive x-Richtung wirkt und auf der anderen Seite aus Kräften resultierend aus der Biegung der Festkörpergelenke 116, sowie eine Federkraft (nicht dargestellt), welche von einem Federelement 115 aufgebracht wird und an einem kombinierten Gegenlager 339 unter anderem in die negative x-Richtung wirkt. Das Federelement, welches an dem kombinierten Gegenlager 339 wirkt, bringt aufgrund der Schrägstellung innerhalb der xy-Ebene eine Federkraft auf das erste Gegenelement 322 auf, welche sowohl der erste Schwenkkraft 338, als auch einer zweiten Schwenkkraft 378 (siehe Figur 8) entgegenwirkt. Durch eine Vorspannung des Federelements 115 kann eine Goniometerbewegung in der entgegengesetzten Schwenkrichtung um die erste Schwenkachse 336 gewährleistet werden.

In der zweiten trapezförmigen Führung 360 sind die Verbindungselemente 366 in einer ersten Verbindungsebene 368, welche parallel zu der zweiten Schwenkachse 376 verläuft, jeweils über zwei erste Enden 372 mit dem ersten Gegenelement 362 verbunden. Im gezeigten Beispiel ist die erste Verbindungsebene 368 eine xy-Ebene. In einer, ebenfalls zur zweiten Schwenkachse 376 parallel verlaufenden und zur ersten Verbindungsebene 368 beabstandeten, zweiten Verbindungsebene 370 sind die Verbindungselemente 366 über jeweils zwei zweite Enden 374 mit dem zweiten Gegenelement 364 verbunden. In der gezeigten Ausgangsposition ist die zweite Verbindungsebene 370 zur ersten Verbindungsebene 368 parallel. Das zweite Gegenelement 364 und die zweite Verbindungsebene 370 sind zum ersten Gegenelement 362 und zur ersten Verbindungsebene 368 in positiver z-Richtung versetzt.

In einer Richtung verlaufend entlang der ersten Verbindungsebene 368 und rechtwinklig zu der zweiten Schwenkachse 376 (im Beispiel in y-Richtung) weisen die zwei ersten Enden 372 eines der Verbindungselemente 366 zu den zwei ersten Enden 372 des anderen Verbindungselements 366 einen ersten Abstand 380 auf. In einer Richtung verlaufend entlang der zweiten Verbindungsebene 370 und rechtwinklig zu der zweiten Schwenkachse 376 (im Beispiel in y-Richtung) weisen die zwei zweiten Enden 374 eines der Verbindungselemente 366 zu den zwei zweiten Enden 374 des anderen Verbindungselements 366 einen zweiten Abstand 382 auf. Der erste Abstand 380 ist kleiner als der zweite Abstand 382.

In Richtungen entlang des Verlaufs einer Ebene 361, welche rechtwinklig zu der zweiten Schwenkachse 376 verläuft, sind die jeweiligen Abstände 384, 386 zwischen den jeweiligen ersten Enden 372 und den jeweiligen zweiten Enden 374 der Verbindungselemente 366 gleich. Die zwei ersten Enden 372 und die zwei zweiten Enden 374 des jeweiligen Verbindungselements 366 sind in Richtung der zweiten Schwenkachse 376, im Beispiel also in x-Richtung zueinander versetzt.

Um eine Goniometerbewegung der Linse 100 um die zweite Schwenkachse 376 durchzuführen, wird mittels eines weiteren Aktors 117 eine zweite Schwenkkraft 378 in das erste Gegenelement 322 der ersten trapezförmigen Führung 320 eingeleitet, wobei die zweite Schwenkkraft 378 eine Komponente rechtwinklig zu der zweiten Schwenkachse 376 und parallel zu der zweiten Verbindungsebenen 370 aufweist. Die dargestellte, zweite Schwenkkraft 378 weist im Ausführungsbeispiel eine (alleinige) Komponente in die positive y-Richtung auf. Die zweite Schwenkkraft 378 wird über die, in Richtung rechtwinklig zu der zweiten Schwenkachse 376 und parallel zu der zweiten Verbindungsebenen 370 biegesteifen Festkörpergelenke 116 der ersten trapezförmigen Führung 320 an das gemeinsame zweite Gegenelement 324, 364 der ersten und der zweiten trapezförmigen Führungen 320, 360 geleitet. Durch die zweite Schwenkkraft 378 wird somit eine Biegung der Festkörpergelenke 116 der zweiten trapezförmigen Führung 360 und damit einhergehend eine Goniometerbewegung des zweiten Gegenelements 324, 364 und des ersten Gegenelements 322 wenigstens näherungsweise um die zweite Schwenkachse 376 erzielt. Solange die erste trapezförmige Führung 320 nicht betätigt wird, wird die Linse 100 also in der Ebene 361 wenigstens näherungsweise verschwenkt.

Die Goniometerbewegung findet ein Ende, wenn ein Kräftegleichgewicht eingetreten ist. Dies ergibt sich auf der einen Seite aus der zweite Schwenkkraft 378, welche in die positive y-Richtung wirkt und auf der anderen Seite aus Kräften resultierend aus der Biegung der Festkörpergelenke 116, sowie eine Federkraft (nicht dargestellt), welche von einem Federelement 115 aufgebracht wird und an dem kombinierten Gegenlager 339 unter anderem in die negative y-Richtung wirkt. Das Federelement 115, welches an dem kombinierten Gegenlager 339 wirkt, bringt, wie bereits erörtert, aufgrund der Schrägstellung innerhalb der xy-Ebene eine Federkraft auf das erste Gegenelement 322 auf, welche sowohl der ersten Schwenkkraft 338, als auch der zweiten Schwenkkraft 378 entgegenwirkt. Durch eine Vorspannung des Federelements 115 kann auch eine Goniometerbewegung in der entgegengesetzten Schwenkrichtung um die zweite Schwenkachse 376 durchgeführt werden.

Anstatt eines kombinierten Gegenlagers 339, können analog zum Parallelverschiebemechanismus 200 auch zwei getrennte Gegenlager verwendet werden. In einer Variante, in welcher der Goniometermechanismus 300 schnellen Betätigungen durch den wenigstens einen Aktor 117 schneller folgen kann, entfällt das kombinierte Gegenlager 339 und somit das Federelement 115. Der jeweilige Aktor 117 bringt zur Verschwenkung des Goniometermechanismus 300 in die eine Richtung eine Druckkraft auf das erste Gegenelement 322 auf, und zur Verschwenkung des Goniometermechanismus 300 in die entgegengesetzte Richtung eine Zugkraft auf das Gegenelement 322 auf, wobei sich die Kräfte der Aktoren 117 und jene aus einer elastischen Rückstellung der Festkörpergelenke 117 zumindest teilweise kompensieren oder auch überkompensieren können.

Die Steuerung des wenigstens einen Aktors 117 mittels der Steuerungseinrichtung 97 erfolgt typischerweise weggesteuert, das heißt, dass dem Aktor 117 ein zu verstellender Weg (Hub) vorgegeben wird.

Im Ausführungsbeispiel sind die ersten Verbindungsebenen 328 und 368, sowie die zweiten Verbindungsebenen 330, 370 der trapezförmigen Führungen 320, 360 in der gezeigten Ausgangsposition parallel zueinander.

In den Details D und E sind die Festkörpergelenke 116 im Detail dargestellt. Diese weisen gegebenenfalls abgerundete Übergänge zu den Gegenelementen 322, 324, 362, 364 und den Verbindungselementen 326, 366 auf - symbolisch als gestrichelte Linien angedeutet.

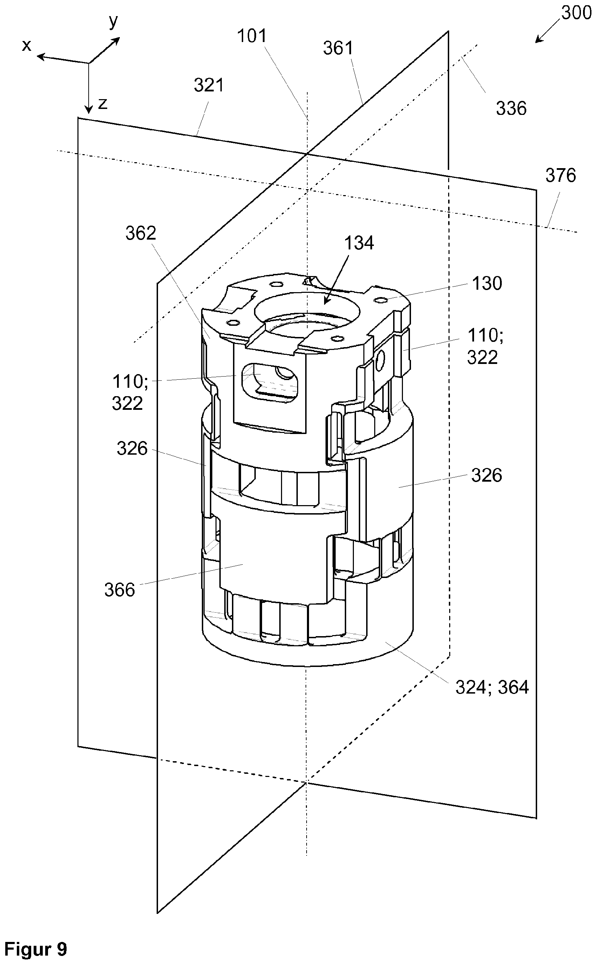

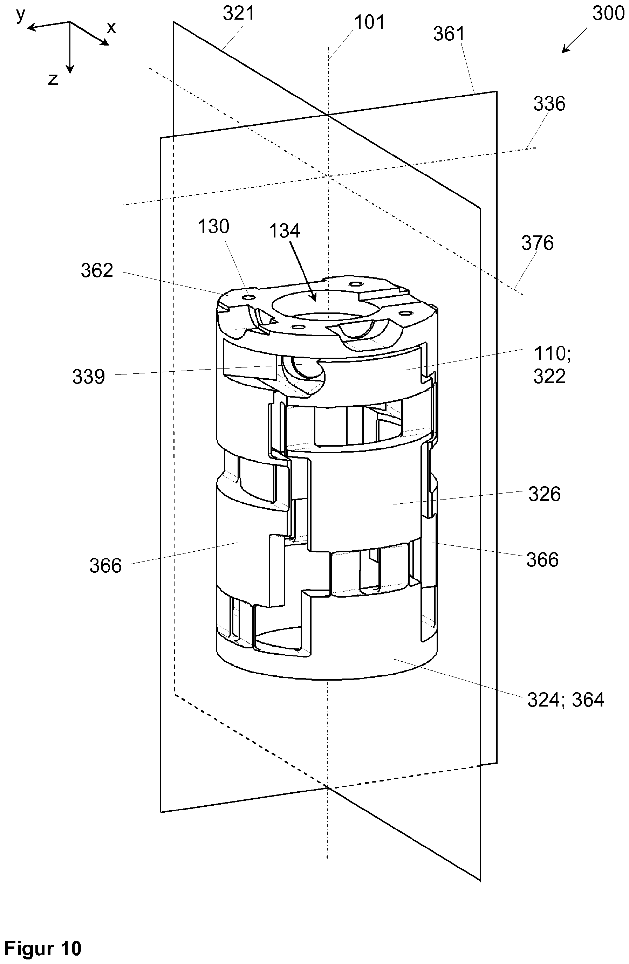

Figuren 9 und 10 zeigen isometrische Ansichten des Goniometermechanismus 300. Gut ersichtlich ist der koaxiale Aufbau des Goniometermechanismus 300 um die Linsenachse 101. Zudem ist eine Öffnung 134 ersichtlich, welche den Goniometermechanismus 300 und die gesamte Vorrichtung 98 durchdringt. Durch die Öffnung 134 können die Röntgenstrahlen durch Vorrichtung 98 hindurchtreten. Zudem sind Gewindelöcher 130 in dem ersten Gegenelement 362 ersichtlich, welche zur Verbindung des Goniometermechanismus 300 mit dem Parallelverschiebemechanismus 200 dienen.

Wie insbesondere in den Figuren 1, 2, 5, 6, 9 und 10 ersichtlich ist, sind der Parallelverschiebemechanismus 200 und der Goniometermechanismus 300 im Wesentlichen hohlzylinderförmig ausgebildet und koaxial zueinander angeordnet, wobei der Goniometermechanismus 300 koaxial im Parallelverschiebemechanismus 200 angeordnet ist.

Innerhalb der Apparatur 96 (vergleiche Figuren 1 und 2) sind somit:
- die Linse 100 mit dem Aufnahmeelement 110 verbunden (bzw. in das Aufnahmeelement 110 eingeschraubt) und das Aufnahmeelement 110 mit dem ersten Gegenelement 322 der ersten trapezförmigen Führung 320 einstückig ausgeführt;
- das erste Gegenelement 322 mittels den Verbindungselementen 326 der ersten trapezförmigen Führung 320 und deren Festkörpergelenken 116 mit dem einstückig ausgeführten, zweiten Gegenelement 324, 364 der ersten und zweiten trapezförmigen Führung 320, 360 verbunden;
- das zweite Gegenelement 324, 364 mittels den Verbindungselementen 366 der zweiten trapezförmigen Führung 360 und deren Festkörpergelenken 116 mit dem ersten Gegenelement 362 der zweiten trapezförmigen Führung 360 verbunden;
- das erste Gegenelement 362 der zweiten trapezförmigen Führung 360 mit dem ersten Gegenelement 222 der ersten Parallelführung 220 verbunden (bzw. verschraubt);
- das erste Gegenelement 222 mittels den Verbindungselementen 226 der ersten Parallelogrammführung 220 und deren Festkörpergelenken 116 mit dem einstückig ausgeführten, zweiten Gegenelement 224, 264 der ersten und zweiten Parallelogrammführung 220, 260 verbunden;
- das zweite Gegenelement 224, 264 mittels den Verbindungselementen 266 der zweiten trapezförmigen Führung 260 und deren Festkörpergelenken 116 mit dem ersten Gegenelement 262 der zweiten trapezförmigen Führung 360 verbunden; und
- das erste Gegenelement 262 der zweiten Parallelogrammführung 260 mit dem zweiten Gehäuseteil 119 der Apparatur 96 verbunden (bzw. verschraubt).

Somit wird durch die Vorrichtung 98 einerseits eine Justage eines Eingangsfokus 104 einer Röntgenlinse 100 auf einen Brennfleck 102 und andererseits ein Goniometermechanismus 300 (ein 2-Achs-Goniometer) realisiert, welcher zur Verschwenkung der Röntgenlinse 100 um die erste und zweite Schwenkachse 336, 376 eingerichtet ist. Die Vorrichtung 98 zeichnet sich unter anderem durch ihre Kompaktheit, Vakuumtauglichkeit und eine hervorragende Zugänglichkeit auch auf engstem Raum und bei gerätetechnischen Beschränkungen aus. Dies erfolgt insbesondere auch mittels der Realisierung der Vorrichtung 98 mittels Festkörpergelenken 116.

Durch die Koaxialbauweise wird eine maximale Bauraumausnutzung erreicht, wodurch die Geräteintegration vereinfacht wird.

Die Vorrichtung 98 zeichnet sich durch eine sehr geringe Teileanzahl aus, da die jeweils zwei Kinematiken (Achsen) aus einem monolithischen Block realisiert werden. Die gezeigte Ausgestaltung zeichnet sich zudem durch eine fertigungsgerechte Gestaltung und Optimierung aus. Es können auch mehrere Anregungsquellen in einem Gerät verwendet werden, vorausgesetzt die Anregungspunkte aller Anregungsquellen lassen sich aufeinander einjustieren.

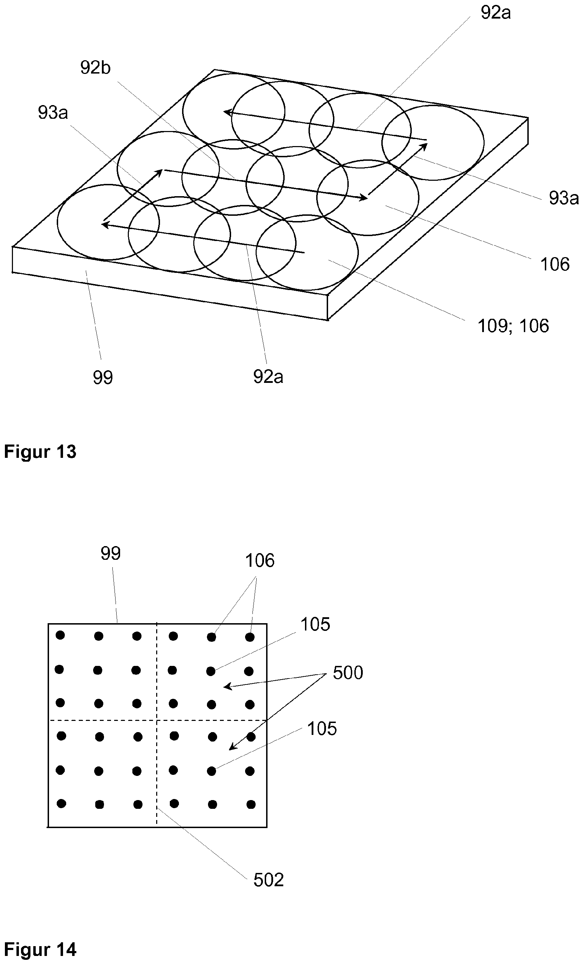

Folgend soll anhand der Figuren 11 bis 14 das erfindungsgemäße Verfahren 90 gemäß einer bevorzugten Ausgestaltung der Erfindung erörtert werden:
Das Verfahren 90 zum Scannen der Probe 99 mittels der Röntgenoptik 100 zum Bestrahlen der Probe 99 mit Röntgenstrahlen 107a kann folgende, in Figur 11 schematisch dargestellte Schritte umfassen:
Zunächst kann in einem Schritt 400 eine Start-Messtelle 109 in einer Ecke der Probe 100 eingenommen werden (vgl. Figur 13), indem der optische Ausgangsfokus 108 der Röntgenlinse 100 mit der Start-Messtelle 109 in Deckung gebracht wird. Dies erfolgt, indem der optische Ausgangsfokus 108 und eine damit deckungsgleiche Messstelle 106 in einer negativen ersten Scanrichtung 92b, entsprechend der negativen x-Richtung bis zum Ende eines voreingestellten Messbereichs verschoben wird. Zusätzlich wird der optische Ausgangsfokus 108 und somit die deckungsgleiche Messstelle 106 in einer negativen zweiten Scanrichtung 93b, entsprechend der negativen y-Richtung bis zum Ende des voreingestellten Messbereichs verschoben.

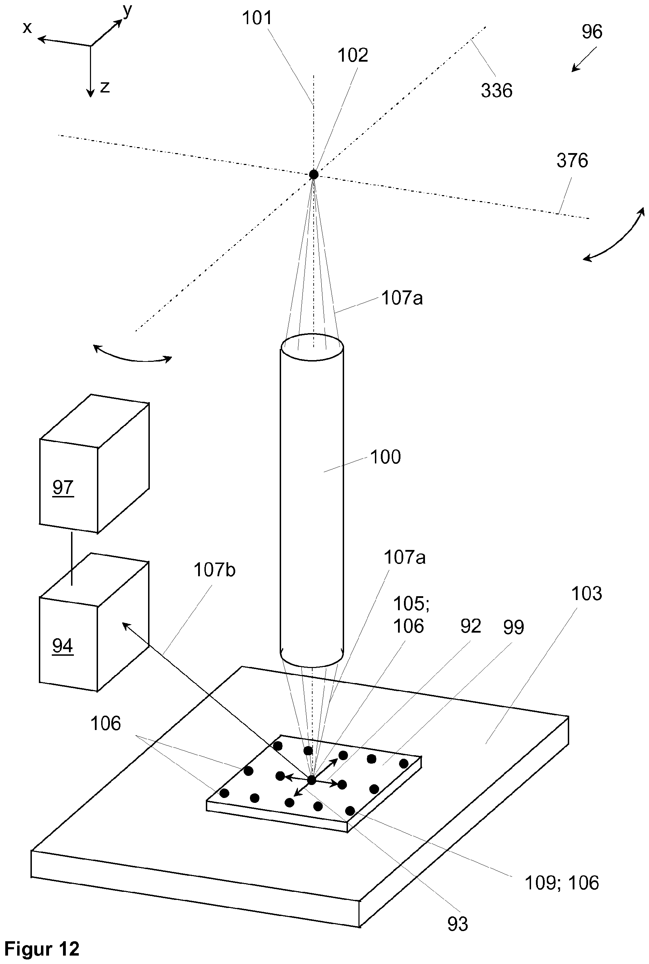

Anschließend erfolgt ein Schritt 402 des Erfassens von der Probe 99 ausgehenden Strahlung 107b. Die ausgehende Strahlung 107b kann z. B. emittierte, reflektierte oder transmittierte Strahlung sein. Es kann sich dabei z. B. um elektromagnetische Strahlung, z. B. Röntgenstrahlung, Korpuskularstrahlen (Elektronenstrahlen) handeln. Die ausgehende Strahlung 107b wird von einem Detektor 94 (vgl. Figur 12) erfasst und mit der erfassten, ausgehenden Strahlung 107b korrelierenden Messwerte an die Steuerungseinrichtung 97 übermittelt. Die ausgehende Strahlung 107b resultiert aus der Bestrahlung der Messstelle 106 mit den aus der Röntgenoptik 100 austretenden Röntgenstrahlen 107a.

Die Probe 99 kann dabei sowohl kontinuierlich, also während des Schwenkens der Röntgenoptik 100, als auch erst nach Einnehmen der jeweiligen Messstelle 106 mit der Röntgenstrahlung 107a bestrahlt werden. Das Erfassen der von der Probe 99 ausgehenden Strahlung 107b kann ebenfalls sowohl kontinuierlich, also während des Schwenkens der Röntgenoptik 100, als auch erst nach Einnehmen der jeweiligen Messstelle 106 erfolgen.

In einem Schritt 404 erfolgt ein Verschieben der Messstelle 106 um ein Inkrement in die positive erste Scanrichtung 92a (vgl. Figur 13). Anschließend wird der Schritt 402 des Erfassen der von der Probe 99 ausgehenden Strahlung 107b, mitsamt Übermittlung der korrelierenden Werte vorgenommen.

In einer Entscheidung 406 wird überprüft, ob ein Ende des Messbereichs in der positiven ersten Scanrichtung 92a erreicht ist. Sollte dies nicht der Fall sein, werden die Schritte 404 und 402 so lange wiederholt, bis das Ende des Messbereichs erreicht ist.

Wenn gemäß Entscheidung 406 das Ende des Messbereichs erreicht ist, folgt eine Entscheidung 408, in welcher abgefragt wird, ob das Ende des Messbereichs in der positiven zweiten Scanrichtung 93a erreicht ist. Sollte dies der Fall sein, erfolgt mittels der Steuereinrichtung 97 gemäß einem Schritt 410 ein Zusammenfügen von den mit der erfassten Strahlung korrelierenden Messwerten zu einem Gesamtscan. Der Gesamtscan kann z. B. grafisch über einen Monitor (nicht dargestellt) ausgegeben werden.

Wenn gemäß Entscheidung 408 das Ende des Messbereichs nicht erreicht ist, erfolgt gemäß einem Schritt 412 ein Verschieben der Messstelle 106 um ein Inkrement in Richtung der positiven zweiten Scanrichtung 93a (vgl. Figur 13), und anschließend gemäß Schritt 402 ein Erfassen ausgehender Strahlung 107b.

In einem Schritt 414 erfolgt ein Verschieben der Messstelle 106 um ein Inkrement in die negative erste Scanrichtung 92b. Anschließend wird der Schritt 402 des Erfassen der von der Probe 99 ausgehenden Strahlung 107b, mitsamt Übermittlung der korrelierenden Werte vorgenommen.

In einer Entscheidung 416 wird überprüft, ob ein Ende des Messbereichs in der negativen ersten Scanrichtung 92b erreicht ist. Sollte dies nicht der Fall sein, werden die Schritte 414 und 402 so lange wiederholt, bis das Ende des Messbereichs erreicht ist.

Wenn gemäß Entscheidung 416 das Ende des Messbereichs erreicht ist, folgt eine Entscheidung 408, in welcher abgefragt wird, ob das Ende des Messbereichs in der positiven zweiten Scanrichtung 93a erreicht ist. Sollte dies der Fall sein, erfolgt mittels der Steuereinrichtung 97 gemäß einem Schritt 410 das Zusammenfügen zu einem Gesamtscan.

Wenn gemäß Entscheidung 408 das Ende des Messbereichs nicht erreicht ist, erfolgt gemäß einem Schritt 412 ein Verschieben der Messstelle 106 um ein Inkrement in Richtung der positiven zweiten Scanrichtung 93a. Anschließend wird das Verfahren nach dem in Figur 11 dargestellten ersten Schritt fortgeführt.

Durch diese Ausgestaltung wird eine entsprechend Figur 13 mäandernde Abrasterung der Probe 99 erreicht.

Als Alternative zur mäandernden Abrasterung kann das Verfahren 90 nach der Verneinung der ersten Entscheidung 408 (also bei einem noch nicht erreichten Ende des Messbereichs in der positiven zweiten Scanrichtung 93a) fortgesetzt werden, indem ein Verschieben der Messstelle 106 in Richtung der negativen ersten Scanrichtung 92b bis zum Anfang des Messbereichs erfolgt. Die Röntgenoptik 100 wird also zurückgeschwenkt. Dies kann zeitgleich, vor oder nach dem Schritt 412 erfolgen, mit welchem ein Verschieben der Messstelle 106 um ein Inkrement in Richtung der positiven zweiten Scanrichtung 93a durchgeführt wird. Anschließend wird das Verfahren mit dem Schritt 402 fortgesetzt (welcher in Figur 11 auf den Schritt 400 folgt), bei dem die ausgehende Strahlung erfasst wird. Anschließend wird das Verfahren wie im oberen Bereich der Figur 11 dargestellt ist, mit den Schritten 404, 402 und der Entscheidung 406 fortgesetzt. Somit erfolgt nach einer gescannten "Zeile" in der positiven ersten Scanrichtung 92a stets ein Zeilenrücklauf, woraufhin in der anschließenden Zeile wieder in der positiven ersten Scanrichtung 92a gescannt wird. Dadurch, dass das Scannen immer in der positiven ersten Scanrichtung 92a erfolgt, können Messfehler aufgrund mechanischer Ungenauigkeiten vermieden werden.

Dadurch, dass die erste Schwenkachse 336 und/oder die zweite Schwenkachse 376 durch den optischen Eingangspunkt 104 der Röntgenoptik 100 verläuft und der optische Eingangspunkt 104 zuvor mit dem Brennfleck 102 der Anodenröhre in Deckung gebracht wurde, ändert sich beim Verschwenken der Röntgenlinse 100 eine von der Röntgenlinse 100 eingefangene Menge der Strahlung 107a nicht.

Aufgrund relativ kleiner Schwenkwinkel der Röntgenoptik um die beiden Schwenkachsen 336, 376 von höchstens +- 5 ° (insbesondere höchstens +- 2 °) kann eine durch das Schwenken bedingte Verschiebung des Ausgangsfokus 108 in z-Richtung vernachlässigt werden.

Das Verfahren 90 kann einen Schritt des Verschiebens der Probe 99 in der zweiten Scanrichtung 93 umfasst. Dadurch kann, das Verschieben der Messstelle 106 in der zweiten Scanrichtung 93 mittels des Verschwenken der Röntgenoptik 100 um die zweite Schwenkachse 376 entfallen. Das Verschieben der Probe 99 in der zweiten Scanrichtung 93 kann erfolgen, indem z.B. der Probentisch 103 mitsamt der Probe 99 in der negativen zweiten Scanrichtung 93b verschoben wird. Dadurch wird die Messstelle 106 bezogen auf die Probe 99 in die positive zweite Scanrichtung 93a verschoben.

Ferner kann ein Verschieben der Probe 99 in der ersten Scanrichtung 92 und/oder der zweiten Scanrichtung 93 auch erfolgen, um die Messstelle 106 auf der Probe 99 innerhalb eines Messrasters 502 von einem Rasterbereich 500 in den nächsten zu verschieben (vgl. Figur 14). Somit können relativ große Verschiebungen der Messstelle 106 von einem Rasterbereich 500 zum nächsten Rasterbereich 500 mittels des Verschiebens der Probe 99 erfolgen, während dazu relativ kleine Verschiebungen innerhalb eines jeweiligen Rasterbereichs 500 mittels des Schwenkens der Röntgenoptik 100 durchgeführt werden. Somit wird einer möglichen Messungenauigkeit in Folge einer Verschiebung des Ausgangsfokus 108 in z-Richtung aufgrund relativ großer Verschwenkungen der Röntgenoptik 100 vorgebeugt.

Mittels des Verfahrens kann durch das Schwenken der Röntgenoptik 100 eine sehr schnelle und auch schwingungsfreie Verschiebung der Messstelle 106 erfolgen. Dies wird insbesondere durch den Einsatz der Festkörpergelenke 116 innerhalb der trapezförmigen Führungen 320, 360 ermöglicht, da Festkörpergelenke 116 im Gegensatz zu herkömmlichen Gelenken keine Haftreibung und somit auch keine Losbrechmomente beim Überwinden der Haftreibung aufweisen.

### Bezugszeichenliste

- 90: Verfahren zum Scannen einer Probe mittels einer Röntgenoptik
- 92: erste Scanrichtung
- 92a: positive erste Scanrichtung
- 92b: negative erste Scanrichtung
- 93: zweite Scanrichtung
- 93a: positive zweite Scanrichtung
- 93b: negative zweite Scanrichtung
- 94: Detektor
- 96: Apparatur
- 97: Steuerungseinrichtung
- 98: Vorrichtung
- 99: Probe
- 100: Röntgenoptik / Kapillar-Linse
- 101: Linsenachse
- 102: vorbestimmter Punkt / Brennfleck
- 103: Probentisch
- 104: optischer Eingangspunkt / Eingangsfokus
- 105: zentrale Messtelle
- 106: Messstelle
- 107a: (eingehende) Röntgenstrahlen
- 107b: (ausgehende) Strahlung
- 108: optischer Ausgangspunkt / Ausgangsfokus
- 109: Start-Messtelle
- 110: Aufnahmeelement
- 112: Spalt
- 114: Einstellelemente
- 115: Federelement
- 116: Festkörpergelenk
- 117: Aktor
- 118: erstes Gehäuseteil
- 119: zweites Gehäuseteil
- 120: Halterung
- 122: Fenster
- 124: Position einer Distanzscheibe
- 126: Schraubverbindung
- 128: Aussparung
- 130: Gewindeloch
- 132: Durchgangsloch
- 134: Öffnung

- 200: Parallelverschiebemechanismus
- 220: erste Parallelkinematik / erste Parallelogrammführung
- 221: erste Parallelverschieberichtung
- 222: erstes Gegenelement
- 224: zweites Gegenelement
- 226: Verbindungselement
- 228: erste Verbindungsebene
- 230: zweite Verbindungsebene
- 232: erstes Ende
- 234: zweites Ende
- 238: erste Einstellkraft
- 239: erstes Gegenlager
- 240: erster Abstand
- 242: zweiter Abstand
- 244: Abstand zwischen erstem und zweitem Ende eines ersten Verbindungselements
- 246: Abstand zwischen erstem und zweitem Ende eines zweiten Verbindungselements

- 260: zweite Parallelkinematik /zweite Parallelogrammführung
- 261: zweite Parallelverschieberichtung
- 262: erstes Gegenelement
- 264: zweites Gegenelement
- 266: Verbindungselement
- 268: erste Verbindungsebene
- 270: zweite Verbindungsebene
- 272: erstes Ende
- 274: zweites Ende
- 278: zweite Einstellkraft
- 279: zweites Gegenlager
- 280: erster Abstand
- 282: zweiter Abstand
- 284: Abstand zwischen erstem und zweitem Ende eines ersten Verbindungselements
- 286: Abstand zwischen erstem und zweitem Ende eines zweiten Verbindungselements

- 300: Goniometermechanismus
- 320: erste Goniometerkinematik / erste trapezförmige Führung
- 321: Ebene rechtwinklig zu der ersten Schwenkachse
- 322: erstes Gegenelement
- 324: zweites Gegenelement
- 326: Verbindungselement
- 328: erste Verbindungsebene
- 330: zweite Verbindungsebene
- 332: erstes Ende
- 334: zweites Ende
- 336: erste Schwenkachse
- 338: erste Schwenkkraft
- 339: kombiniertes Gegenlager
- 340: erster Abstand
- 342: zweiter Abstand
- 344: Abstand zwischen erstem und zweitem Ende eines ersten Verbindungselements
- 346: Abstand zwischen erstem und zweitem Ende eines ersten Verbindungselements

- 360: zweite Goniometerkinematik / zweite trapezförmige Führung
- 361: Ebene welche sich rechtwinklig zu der zweiten Schwenkachse erstreckt
- 362: erstes Gegenelement
- 364: zweites Gegenelement
- 366: Verbindungselement
- 368: erste Verbindungsebene
- 370: zweite Verbindungsebene
- 372: erstes Ende
- 374: zweites Ende
- 376: zweite Schwenkachse
- 378: zweite Schwenkkraft
- 380: erster Abstand
- 382: zweiter Abstand
- 384: Abstand zwischen erstem und zweitem Ende eines ersten Verbindungselements
- 386: Abstand zwischen erstem und zweitem Ende eines zweiten Verbindungselements
- 400: Einnehmen einer Start-Messtelle
- 402: Erfassen ausgehender Strahlung
- 404: Verschieben der Messstelle in positiver erster Scanrichtung
- 406: Entscheidung, ob Ende des Messbereichs in positiver erster Scanrichtung erreicht ist
- 408: Entscheidung, ob Ende des Messbereichs in positiver zweiter Scanrichtung erreicht ist
- 410: Zusammenfügen zu einem Gesamtscan
- 412: Verschieben der Messstelle in positiver zweiter Scanrichtung
- 414: Verschieben der Messstelle in negativer erster Scanrichtung
- 416: Entscheidung, ob Ende des Messbereichs in negativer erster Scanrichtung erreicht ist

- 500: Rasterbereich
- 502: Messraster

## Patentansprüche

1. Verfahren (90) zum Scannen einer Probe (99) mittels einer Röntgenoptik (100) zum Bestrahlen der Probe (99) mit Röntgenstrahlen (107a), umfassend folgende Schritte:
(a)Verschieben (404, 414) einer durch einen optischen Ausgangsfokus (108) der Röntgenoptik (100) definierten Messstelle (106) in der Probe (99) in einer ersten Scanrichtung (92);
(b)Erfassen (402) einer von der Probe (99) ausgehenden Strahlung (107b) an mindestens zwei Messstellen (106) entlang der ersten Scanrichtung (92);
(c)Zusammenfügen (410) von mit der erfassten Strahlung (107b) korrelierenden Messwerten zu einem Gesamtscan,
**dadurch gekennzeichnet, dass**
das Verschieben der Messstelle (106) in der Probe in der ersten Scanrichtung (92) mittels Schwenkens der Röntgenoptik (100) um eine erste Schwenkachse (336) durchgeführt wird.

2. Verfahren (90) nach Anspruch 1, umfassend folgende, auf Schritt (b) folgende Schritte:
- Verschieben (412) der Messstelle (106) in der Probe (99) in einer zweiten Scanrichtung (93) mittels Schwenkens der Röntgenoptik (100) um eine zweite Schwenkachse (376); und
- Wiederholen der Schritte (a) und (b).

3. Verfahren (90) nach einem der vorhergehenden Ansprüche, wobei die erste Schwenkachse (336) und/oder die zweite Schwenkachse (376) durch einen optischen Eingangspunkt (104) der Röntgenoptik (100) verläuft.

4. Verfahren (90) nach einem der vorhergehenden Ansprüche, wobei das Verfahren einen Schritt des Verschiebens der Probe (99) in der der ersten Scanrichtung (92) und/oder der zweiten Scanrichtung (93) umfasst.

5. Apparatur (96) zum Scannen einer Probe (99) umfassend:
- Eine Röntgenoptik (100) zum Bestrahlen einer Probe (99) mit Röntgenstrahlen (107a), wobei die Röntgenoptik (100) einen optischen Ausgangsfokus (108) aufweist;
- einen, mit der Röntgenoptik (100) verbundenen Goniometermechanismus (300), wobei der Goniometermechanismus (300) eingerichtet ist, ein Schwenken der Röntgenoptik (100) um eine erste Schwenkachse (336) auszuführen;
- wenigstens einen Aktor (117), welcher zur Betätigung des Goniometermechanismus (300) ausgebildet ist; und
- eine Steuerungseinrichtung (97), welche zur Durchführung des Verfahrens (90) nach einem der vorhergehenden Ansprüche ausgebildet ist.

6. Apparatur (96) nach Anspruch 5, wobei der Goniometermechanismus (300) eingerichtet ist, ein Schwenken der Röntgenoptik (100) um eine zweite Schwenkachse (376) auszuführen.

7. Apparatur (96) nach einem der Ansprüche 5 bis 6, wobei die Röntgenoptik (100) eine Röntgenlinse, insbesondere eine Kapillarlinse, bevorzugt eine Polykapillarlinse ist.

8. Apparatur (96) nach einem der Ansprüche 5 bis 7, wobei der Aktor (117) einen Elektromotor, insbesondere einen Linearmotor, oder ein Piezoelement umfasst.

9. Apparatur (96) nach einem der Ansprüche 5 bis 8, wobei der Goniometermechanismus (300) wenigstens eine trapezförmige Führung (320, 360) umfasst.

10. Apparatur (96) nach Anspruch 9, wobei die wenigstens eine trapezförmige Führung (320, 360) ein erstes Gegenelement (322, 362) und ein zweites Gegenelement (324, 364) umfasst, welche mittels eines Verbindungselementenpaares (326, 366) (320, 360) miteinander verbunden sind.

11. Apparatur (96) nach Anspruch 10, umfassend zwei trapezförmige Führungen (320, 360), wobei die ersten Gegenelemente (322, 362) zwischen dem zweiten Gegenelement (324, 364) der jeweiligen Führung (320, 360) und der ersten Schwenkachse (336) angeordnet sind und zwei der ersten Gegenelemente (322, 362) oder zwei der zweiten Gegenelemente (324, 364) der wenigstens zwei Führungen (320, 360) unbeweglich miteinander verbunden oder einstückig ausgeführt sind.

12. Apparatur (96) nach Anspruch 11, wobei
- das erste Gegenelement (322) der ersten trapezförmigen Führung (320) mit der Röntgenoptik (100) unbeweglich verbunden ist,
- das zweite Gegenelement (324) der ersten trapezförmigen Führung (320) mit dem zweiten Gegenelement (364) der zweiten trapezförmigen Führung (360) unbeweglich verbunden oder einstückig ausgeführt ist, und
- das erste Gegenelement (362) der zweiten trapezförmigen Führung (360) zur Fixierung der Apparatur (96) vorgesehen ist.

13. Apparatur (96) nach wenigstens einem der Ansprüche 5 bis 12, wobei der Goniometermechanismus (300), insbesondere die wenigstens eine trapezförmige Führung (320, 360), Festkörpergelenke (366) aufweist.

14. Apparatur (96) nach einem der vorhergehenden Ansprüche 9 bis 13, wobei die trapezförmigen Führungen (320, 360) ineinander angeordnet sind.

15. Apparatur (96) nach einem der Ansprüche 5 bis 14, wobei der Goniometermechanismus (300) einstückig ausgebildet ist.

## Claims

1. A method (90) for scanning a sample (99) by means of an X-ray optical system (100) for irradiating the sample (99) with X-rays (107a), comprising the following steps:
(a) displacing (404, 414) a measurement point (106) in the sample (99) defined by an optical initial focus (108) of the X-ray optical system (100) in a first scanning direction (92);
(b) detecting (402) radiation (107b) exiting from the sample (99) at at least two measurement points (106) along the first scanning direction (92);
(c) assembling (410) measured values which correlate with the detected radiation (107b) to form an overall scan,
**characterised in that**
the displacement of the measurement point (106) in the sample in the first scanning direction (92) is performed by swivelling the X-ray optical system (100) about a first swivel axis (336).

2. The method (90) according to Claim 1, comprising the following steps subsequent to step (b):
- displacing (412) the measurement point (106) in the sample (99) in a second scanning direction (93) by swivelling the X-ray optical system (100) about a second swivel axis (376); and
- repeating steps (a) and (b).

3. The method (90) according to either one of the preceding claims, wherein the first swivel axis (336) and/or the second swivel axis (376) extends through an optical entry point (104) of the X-ray optical system (100).

4. The method (90) according to any one of the preceding claims, wherein the method comprises a step of displacing the sample (99) in the first scanning direction (92) and/or the second scanning direction (93).

5. An apparatus (96) for scanning a sample (99) comprising:
- an X-ray optical system (100) for irradiating a sample (99) with X-rays (107a), wherein the X-ray optical system (100) has an optical initial focus (108);
- a goniometer mechanism (300) connected to the X-ray optical system (100), wherein the goniometer mechanism (300) is set up to swivel the X-ray optical system (100) about a first swivel axis (336);
- at least one actuator (117) which is configured to actuate the goniometer mechanism (300); and
- a control device (97) which is configured to carry out the method (90) according to any one of the preceding claims.

6. The apparatus (96) according to Claim 5, wherein the goniometer mechanism (300) is set up to swivel the X-ray optical system (100) about a second swivel axis (376).

7. The apparatus (96) according to either one of Claims 5 to 6, wherein the X-ray optical system (100) is an X-ray lens, in particular a capillary lens, preferably a polycapillary lens.

8. The apparatus (96) according to any one of Claims 5 to 7, wherein the actuator (117) comprises an electric motor, in particular a linear motor, or a piezo element.

9. The apparatus (96) according to any one of Claims 5 to 8, wherein the goniometer mechanism (300) comprises at least one trapezoidal guide (320, 360).

10. The apparatus (96) according to Claim 9, wherein the at least one trapezoidal guide (320, 360) comprises a first counter-element (322, 362) and a second counter-element (324, 364) which are connected together by means of a pair of connection elements (326, 366) (320, 360).

11. The apparatus (96) according to Claim 10, comprising two trapezoidal guides (320, 360), wherein the first counter-elements (322, 362) are arranged between the second counter-element (324, 364) of the respective guide (320, 360) and the first swivel axis (336) and two of the first counter-elements (322, 362) or two of the second counter-elements (324, 364) of the at least two guides (320, 360) are immovably connected together or are of one-piece construction.

12. The apparatus (96) according to Claim 11, wherein
- the first counter-element (322) of the first trapezoidal guide (320) is immovably connected to the X-ray optical system (100),
- the second counter-element (324) of the first trapezoidal guide (320) is immovably connected to or is of one-piece construction with the second counter-element (364) of the second trapezoidal guide (360), and
- the first counter-element (362) of the second trapezoidal guide (360) is provided for fixation of the apparatus (96).

13. The apparatus (96) according to at least one of Claims 5 to 12, wherein the goniometer mechanism (300), in particular the at least one trapezoidal guide (320, 360), has flexure linkages (366).

14. The apparatus (96) according to any one of preceding Claims 9 to 13, wherein the trapezoidal guides (320, 360) are arranged inside one another.

15. The apparatus (96) according to any one of Claims 5 to 14, wherein the goniometer mechanism (300) is of one-piece construction.

## Revendications

1. Procédé (90) de balayage d'un échantillon (99) au moyen d'une optique à rayons X (100) pour irradier l'échantillon (99) avec des rayons X (107a), comprenant les étapes suivantes :
(a) déplacement (404, 414) d'un emplacement de mesure (106) dans l'échantillon (99) défini par un foyer de sortie optique (108) de l'optique à rayons X (100) dans une première direction de balayage (92) ;
(b) détection (402) d'un rayonnement (107b) provenant de l'échantillon (99) en au moins deux emplacements de mesure (106) le long de la première direction de balayage (92) ;
(c) regroupement (410) des valeurs de mesure corrélant avec le rayonnement détecté (107b) en un balayage global,
**caractérisé en ce que**
le déplacement de l'emplacement de mesure (106) dans l'échantillon dans la première direction de balayage (92) est effectué au moyen d'un pivotement de l'optique à rayons X (100) sur un premier axe de pivotement (336).

2. Procédé (90) selon la revendication 1, comprenant les étapes suivantes, faisant suite à l'étape (b) :
- déplacement (412) de l'emplacement de mesure (106) dans l'échantillon (99) dans une deuxième direction de balayage (93) au moyen d'un pivotement de l'optique à rayons X (100) sur un deuxième axe de pivotement (376) ; et
- répétition des étapes (a) et (b).

3. Procédé (90) selon l'une des revendications précédentes, le premier axe de pivotement (336) et/ou le deuxième axe de pivotement (376) passant par un point d'entrée optique (104) de l'optique à rayons X (100).

4. Procédé (90) selon l'une des revendications précédentes, le procédé comprenant une étape du déplacement de l'échantillon (99) dans la première direction de balayage (92) et/ou la deuxième direction de balayage (93).

5. Équipement (96) pour le balayage d'un échantillon (99), comprenant :
- une optique à rayons X (100) pour l'irradiation d'un échantillon (99) avec des rayons X (107a), l'optique à rayons X (100) présentant un foyer de sortie optique (108) ;
- un mécanisme goniométrique (300) relié à l'optique à rayons X (100), le mécanisme goniométrique (300) étant mis en place pour exécuter un pivotement de l'optique à rayons X (100) sur un premier axe de pivotement (336) ;
- au moins un actionneur (117), lequel est formé pour l'actionnement du mécanisme goniométrique (300) ; et
- une installation de commande (97), laquelle est formée pour l'exécution du procédé (90) selon l'une des revendications précédentes.

6. Équipement (96) selon la revendication 5, le mécanisme goniométrique (300) étant mis en place pour exécuter un pivotement de l'optique à rayons X (100) sur un deuxième axe de pivotement (376).

7. Équipement (96) selon l'une des revendications 5 à 6, l'optique à rayons X (100) étant une lentille à rayons X, en particulier une lentille capillaire, de préférence une lentille polycapillaire.

8. Équipement (96) selon l'une des revendications 5 à 7, l'actionneur (117) comprenant un moteur électrique, en particulier un moteur linéaire, ou un élément piézo.

9. Équipement (96) selon l'une des revendications 5 à 8, le mécanisme goniométrique (300) comprenant au moins un guide trapézoïdal (320, 360).

10. Équipement (96) selon la revendication 9, l'au moins un guide trapézoïdal (320, 360) comprenant un premier contre-élément (322, 362) et un deuxième contre-élément (324, 364), lesquels sont reliés entre eux au moyen d'une paire d'éléments de liaison (326, 366) (320, 360).

11. Équipement (96) selon la revendication 10, comprenant deux guides trapézoïdaux (320, 360), les premiers contre-éléments (322, 362) étant disposés entre le deuxième contre-élément (324, 364) du guide respectif (320, 360) et le premier axe de pivotement (336), et deux des premiers contre-éléments (322, 362) ou deux des deuxièmes contre-éléments (324, 364) des au moins deux guides (320, 360) étant reliés entre eux de façon immobile ou réalisés d'une pièce.

12. Équipement (96) selon la revendication 11,
- le premier contre-élément (322) du premier guide trapézoïdal (320) étant relié de façon immobile avec l'optique à rayons X (100),
- le deuxième contre-élément (324) du premier guide trapézoïdal (320) étant relié de façon immobile ou réalisé d'une pièce avec le deuxième contre-élément (364) du deuxième guide trapézoïdal (360), et
- le premier contre-élément (362) du deuxième guide trapézoïdal (360) étant prévu pour la fixation de l'équipement (96).

13. Équipement (96) selon l'une des revendications 5 à 12, le mécanisme goniométrique (300), en particulier l'au moins un guide trapézoïdal (320, 360), présentant des articulations de corps solide (366).

14. Équipement (96) selon l'une des revendications précédentes 9 à 13, les guides trapézoïdaux (320, 360) étant disposés l'un dans l'autre.

15. Équipement (96) selon l'une des revendications 5 à 14, le mécanisme goniométrique (300) étant formé d'une seule pièce.
